# EUROPÄISCHE PATENTSCHRIFT

(11) **EP 2 295 158 B1**
(45) Veröffentlichungstag und Bekanntmachung des Hinweises auf die Patenterteilung: **09.10.2013**
(21) Anmeldenummer: 10174386.2
(22) Anmeldetag: 27.08.2010
(51) Int. Cl.: B08B 1/04, F24J 2/46, F24J 2/40

(54) **Reinigungsgerät für Thermosolarkraftwerke**
Cleaning device for thermosolar power plants
Appareil de nettoyage pour centrales thermosolaires

(30) Priorität: 09.09.2009 DE 102009040778
(43) Veröffentlichungstag der Anmeldung: 16.03.2011
(73) Patentinhaber: MULAG FAHRZEUGWERK Heinz Wössner GmbH & CO. KG, 77728 Oppenau (DE)
(72) Erfinder: Wössner, Werner, 77740, Bad Peterstal (DE)
(74) Vertreter: Alber, Norbert

(56) Entgegenhaltungen:
- EP-A1- 0 874 086
- EP-A2- 1 284 239
- DE-A1-102004 036 094
- ES-A1- 2 316 317
- ES-A6- 2 013 032
- FR-A1- 2 635 024

## Beschreibung

### I. Anwendungsgebiet

Die Erfindung betrifft eine Vorrichtung für das Reinigen der im Querschnitt parabelförmigen Reflektorrinnen von solarthermischen Kraftwerken.

### II. Technischer Hintergrund

Bei derartigen solarthermischen Kraftwerken wird im Brennpunkt der parabolförmigen Reflektorrinnen ein **Zentralrohr** geführt, welches das von den Reflektorrinnen dorthin reflektierte Licht absorbieren, wodurch das im **Zentralrohr** strömende Wärmemedium, meist ein Öl, stark erhitzt wird, was abseits der Reflektorrinnen im eigentlichen Kraftwerk zur Erzeugung von elektrischem Strom oder auch einem anderen Energieträger benutzt wird, meist auf dem klassischen Weg über Verdampfen von Wasser und Antrieb einer Dampfturbine.

Da bei solchen solarthermischen Kraftwerken der Wirkungsgrad mit der erzielbaren Temperatur im Wärmefluid stark ansteigt, werden solche solarthermischen Kraftwerke fast ausschließlich in Regionen mit hohem Temperaturniveau, beispielsweise der spanischen Hochebene oder in Wüstengebieten in Asien oder Afrika, betrieben.

Der Wirkungsgrad eines solchen Kraftwerkes kann sich deutlich verschlechtern, wenn die Reflektorflächen in ihrer Reflektionsfähigkeit beeinträchtigt werden, beispielsweise da sie mit etwas Staub bedeckt sind, was ebenso für das das Wärmemedium leitende und die Sonnenstrahlen absorbierende Zentralrohr gelten kann.

Da in den sehr sonnenreichen Betriebsregionen solche Anlagen in der Regel kaum Staub bindender Pflanzenbewuchs vorhanden ist, sondern im Gegenteil viel ungebundener Staub und Sand vorhanden ist, ist gerade in diesen Regionen die Verstaubungsgeschwindigkeit sehr groß, was ohne regelmäßige Reinigung sehr schnell zu Effizienzeinbußen von über 20% dieser Anlagen führen kann.

Dies wurde bisher zu verhindern versucht, indem die Reflektorrinnen regelmäßig oder bei Bedarf gereinigt wurden:
Entweder wurden diese Reflektorrinnen von einem Fahrzeug aus mit von Hand geführten Schläuchen abgespritzt, oder auch aus entsprechend der Kontur der Reflektorrinnen gebogenen Sprührohren, in deren Verlauf eine Vielzahl von Wasseraustrittsöffnungen angeordnet waren, um das Wasser oder die Reinigungsflüssigkeit möglichst gleichmäßig und flächig verteilt auf die Reflektorrinnen aufzubringen.

Dabei spielt jedoch das zweite Problem der Aufstellungsorte solcher solarthermischen Kraftwerke eine Rolle, nämlich der dort fast regelmäßig vorhandene Wassermangel.

Eine häufige und ausgiebige Reinigung der Reflektorrinnen mit Wasser ergibt bei den meist sehr großflächigen solarthermischen Anlagen schnell einen Wasserbedarf von vielen Kubikmetern pro Tag, der häufig vor Ort nicht oder nur zu sehr hohen Preisen gedeckt werden könnte, wobei auch zu bedenken ist, dass kein unbehandeltes Grundwasser verwendet werden kann, sondern entweder Regenwasser oder destilliertes Wasser, was die Kosten zusätzlich in die Höhe treibt.

In diesem Zusammenhang hat sich beim Abspritzen der Solarrinnen gezeigt, dass für eine nachhaltige Reinigung nur durch Abspritzen sehr große Wassermengen benötigt werden, denn sobald hierbei die Wassermenge reduziert wird, erreicht unter Umständen das im oberen Bereich der Reflektorrinne aufgebrachte und dort mit Schmutzpartikeln angereicherte Wasser nicht mehr die Unterkante der Reflektorrinne, da es aufgrund der hohen Umgebungstemperatur und starken Sonneneinstrahlung und vor allem der meist hohen Eigentemperatur der Reflektorflächen zuvor zumindest großen Teils verdampft und deshalb die im oberen Bereich angelösten Schmutzpartikel zwar etwas nach unten transportiert werden, sich dort jedoch ablagern, bevor sie über die Unterkante die Reflektorrinnen verlassen.

Ein weiteres Problem stellen dabei die Aufständerungen der Drehachse der Reflektorrinnen dar, die bei zunehmend steiler Stellung der Reflektorrinne über in Längsrichtung beabstandete Schlitze in die Reflektorrinne hineinragen und das Reinigen erschweren, weshalb die Reflektorrinne insbesondere nicht in senkrechter Stellung, also mit dem oberen Rand vertikal genau über den unteren Rand gereinigt werden kann, sondern nur mit gegenüber der Unterkante nach hinten gekippter Oberkante.

Das spezielle Problem der Reinigung solcher Parabolrinnen ist in der spanischen Patentanmeldung ES 2316317 sowie in dem daraus erwachsenen europäischen Patent EP 2153914 B1 und der deutschen Patentanmeldung DE 10 2004 036 094 beschrieben.

Bei der genannten deutschen Schrift ist die Reinigungsvorrichtung nicht an einem Auslegerarm, sondern in unveränderlicher Position zum Fahrzeug angeordnet, was es erfordert, dass das Fahrzeug in exakter Relativlage zur Parabolrinne positioniert ist. Deshalb ist das Fahrzeug schienengeführt und die Parabolrinne muss in eine genau definierte Waschposition gedreht werden.

In der ES 2316317 sind die Reinigungsköpfe (Sprühleiste oder rotierende Bürste, die entsprechend der Kontur der Parabolrinne gebogen ist) an einer Art Ausleger gehalten, aber es ist nur eine einzige Bürste pro Auslegerarm und damit pro Hälfte der Parabolrinne vorhanden, was eine entsprechend fragile und wenig wirksame Konstruktion des flexiblen Bürstengrundkörpers erfordert.

Nächstreichender Stand der Technik ist die EP 0874086 in Form eines Waschgerätes für die gekrümmten Wände von Straßentunneln. Das Waschgerät umfasst zwei Auslegerarme und an jedem Auslegerarm ist ein Bürstenkopf befestigt, der jeweils mindestens drei Bürsten umfasst.

Ein ähnliches Tunnelwaschgerät zeigt die spanische Anmeldung ES 2013032, welche jedoch hinter dem Offenbarungsgehalt des europäischen Tunnelwaschgerätes zurück bleibt, indem bei der spanischen Anmeldung an jedem Auslegerarm nur eine einzige zylindrische rotierende Bürste befestigt ist.

Auch die französische Patentanmeldung FR 2635024 zeigt ein Tunnelwaschgerät, bei dem der Bürstenkopf drei nebeneinander liegende Bürsten umfasst, die jedoch einander nicht überlappen und deshalb zwischen sich eine Lücke übrig lassen, da die drei Bürsten - von denen auch die äußeren beidseits jeweils gelagert sind - auf einer durchgehenden Linie angeordnet sind.

### III. Darstellung der Erfindung

### a) Technische Aufgabe

Es ist daher die Aufgabe gemäß der Erfindung, eine Vorrichtung zum Reinigen von Rinnen mit gekrümmtem Querschnitt wie etwa parabolförmigen Reflektorrinnen zu schaffen, welches trotz robuster und kostengünstiger Konstruktion der Reinigungsvorrichtung eine schnelle und zuverlässige Reinigung bei geringem Bedarf an Reinigungsflüssigkeit ermöglicht.

### b) Lösung der Aufgabe

Diese Aufgabe wird durch die Merkmale des Anspruchs 1 gelöst. Vorteilhafte Ausführungsformen ergeben sich aus den Unteransprüchen.

Indem das Reinigungsgerät einen längeren und einen kürzeren Auslegerarm besitzt und der längere Auslegerarm in Fortschrittsrichtung insbesondere vor dem kürzeren Auslegerarm angeordnet ist, können die beiden bezüglich des Zentralrohres einander gegenüberliegenden Rinnenbereiche gleichzeitig in einem Arbeitsgang gereinigt werden.

Von dem weiter vorne fahrenden längeren Auslegerarmen wird dabei der höher liegende Rinnenbereich gereinigt, so dass von dort nach unten abfließendes, verschmutztes Reinigungswasser im unteren Bereich gegebenenfalls von dem nachfolgendem unteren Reinigungskopf des kürzeren Auslegerarmes erneut erfasst und abtransportiert wird.

Die einzelnen Reinigungsköpfe besitzen dabei eine in Fortschrittsrichtung der Rinnen betrachtet, also z. B. quer zur Rotationsachse der Reinigungsköpfe, eine gekrümmte, insbesondere konvex gekrümmte Kontur, die in etwa der konkaven Kontur der zu reinigenden gebogenen Flächen angepasst ist.

Die Auslegerarme sind teleskopierbar und bestehen insbesondere aus zwei oder drei gelenkig miteinander verbundenen, jeweils teleskopierbaren Armteilen.

Die Stellzylinder zwischen den Armteilen, die die Winkelstellung der Armteile zueinander verändern, sind dabei vorzugsweise auf der Außenseite angeordnet, also der Seite mit dem größeren Zwischenwinkel zwischen den beiden Armteilen, damit der kleine Zwischenwinkel völlig frei bleibt und in diesem Bereich keine ungewollten Kontaktierungen zwischen dem Auslegerarm und dem gegen Beschädigungen empfindlichen Zentralrohr befürchtet werden müssen.

Am freien Ende des Auslegerarmes ist der Reinigungskopf in seiner Schrägstellung zur Erstreckungsrichtung des letzten Armteiles einstellbar und darüber hinaus in seiner Drehlage um die Erstreckungsrichtung des letzten Armteiles um 180° schwenkbar.

Ersteres ermöglicht die Positionierung des Reinigungskopfes entsprechend der Neigung der zu reinigenden Fläche. Letzteres bietet die Möglichkeit, bei Wechseln der Auslegerrichtung des Auslegerarmes - also von der linken zur rechten Seite eines Trägerfahrzeuges - dennoch die gewünschte Rotationsrichtung des Reinigungskopfes relativ zur Bewegungsrichtung des Fahrzeuges beizubehalten.

Bei vielen parallel liegenden Reflektorrinnen ermöglicht es dies, dass das Fahrzeug am Ende der einen Reflektorrinne wendet und in die nächste Spur zwischen den Reflektorrinnen einfährt und dort sofort mit der Reinigung beginnt, was jedoch das Wechseln der Auslegerrichtung erfordert und damit auch die Drehbarkeit des Reinigungskopfes am Auslegerarm um 180°.

Die Reinigung erfolgt mittels rotierender Bürsten, die auf den zu reinigenden Flächen angelegt werden und in Fortschrittsrichtung, der Längsrichtung der Reflektorrinnen, also in der Richtung, in der das Zentralrohr verläuft, bewegt werden, und dem zusätzlichen Aufbringen einer Reinigungsflüssigkeit, in der Regel kalkfreiem Wasser, auf die zu reinigende Innenfläche der Reflektorrinnen.

Aus diesem Grund besteht jeder Reinigungskopf aus rotierenden Bürsten und einer Sprühvorrichtung, meist einer quer zur Fortschrittsrichtung angeordneten Sprühleiste, die über die gesamte Breite des Reinigungskopfes durchgeht und eine Vielzahl von Austrittsöffnungen für Reinigungsflüssigkeit in Querrichtung nebeneinander aufweist.

Vorzugsweise weist die Sprühleiste auch wenigstens eine Austrittsöffnung auf, die auf das Zentralrohr, insbesondere dessen Oberseite, gerichtet ist.

Die Austrittsöffnungen können direkt auf die zu reinigende Fläche gerichtet sein. In diesem Fall ist die Reinigungsvorrichtung dann in Fortschrittsrichtung den Bürsten vorgelagert, wenn die Bürste in eine Rotationsrichtung besitzen, die so gerichtet ist, dass sich die Borsten auf der zu reinigenden Fläche in Fortschrittrichtung bewegen, was in aller Regel der Fall ist.

Wenn dagegen die Austrittsöffnungen stattdessen auf die Bürste gerichtet sind, ist die Sprühvorrichtung den Bürsten nachgelagert wenn sich die Bürsten im Kontaktpunkt mit der zu reinigenden Fläche in Fortschrittsrichtung bewegen, im anderen Fall ebenfalls vorangestellt.

Der Reinigungskopf umfasst drei rotierende Bürsten, deren Rotationsachsen parallel zur Tangentialrichtung der zu reinigenden Fläche, also quer zur Fortschrittsrichtung, verlaufen.

Die Rotationsachsen der einzelnen Bürsten stehen dabei schräg zueinander, so dass sie in der Summe eine zweifach geknickte Kontur bilden, die der Krümmung der zu reinigenden Fläche in etwa angepasst ist. Dadurch, dass die Bürsten mit den freien Enden ihrer Borsten über eine gewisse Strecke auf der zu reinigenden Fläche anliegen und beim Rotieren der Bürsten entlang dieser gezogen werden, können in diesem Fall auch - bei rotierendem Antrieb - zylindrische Einzelbürsten verwendet werden.

Die drei rotierenden Bürsten überlappen sich in Verlaufsrichtung teilweise, um sicher zu stellen, dass keine ungereinigten Zwischenbereiche verbleiben.

Darüber hinaus beträgt die Borstenlänge mindestens 12 %, besser 25 %, besser 30 % des Abstandes des Bodens der Rinne vom Zentralrohr, um die Krümmung der zu reinigenden Fläche gegenüber der zylindrischen Bürste auszugleichen.

Der Zwischenwinkel zwischen den Rotationsachsen der einzelnen Bürsten eines Reinigungskopfes ist zwar einstellbar, vorzugsweise jedoch nicht automatisch, da dies den mechanischen Aufwand zu stark vergrößern würde.

**Von den** drei Bürsten ist die mittlere Bürste am Auslegerarm **in Reinigungsrichtung vorzugsweise vor den seitlichen Bürsten befestigt und zwar insbesondere in ihrer Winkelstellung automatisch einstellbar befestigt, während die beiden anderen Bürsten, die auf einander gegenüberliegenden Seiten an dieser mittleren Bürste befestigt und einstellbar fixiert und fliegend gelagert sind.**

In einer weiteren Ausführungsform kann zumindest eine der äußeren Bürsten in ihrer relativ Lage zur mittleren und damit auch der anderen äußeren Bürste verlagerbar sein, vor allem um einem Hindernis auszuweichen.

Bei einem Reinigungskopf, der unterhalb oder oberhalb des Zentralrohres des Parabolspiegels arbeitet, könnte das Hindernis eine in größeren Längsabständen vorhandene Halterung dieses Zentralrohres sein, die häufig relativ breit ausgebildet ist, so dass dann jeweils die diesem Zentralrohr nächstliegende äußere Bürste verlagerbar gestaltet werden soll.

Bei einer ersten Alternative ist die Rotationsachse dieser äußeren Bürste drehbar am Ende des sie tragenden Kragarmes befestigt, der seinerseits in einem einstellbaren, aber nicht während des Betriebes veränderbaren, Winkel an der Halterung der mittleren Bürste befestigt ist.

Dadurch wird also der Zwischenwinkel der Rotationsachse dieser beweglichen äußeren Bürste zu den Rotationsachsen der anderen beiden Bürsten verändert.

In einer anderen Alternative ist dieser Kragarm am anderen Ende ebenfalls schwenkbar an der Halterung der mittleren Bürste befestigt, und darüber hinaus Bestandteil eines Parallelogramms. Der eine kurze Schenkel des Parallelogramms ist mit seinen beiden Endpunkten an der Halterung der mittleren Bürste gelenkig befestigt, während der andere kurze Schenkel des Parallelogramms dagegen durch die über die Bürste hinaus verlängerte Rotationsachse der beweglichen äußeren Bürste gebildet wird.

Wenn man nun - z. B. mittels eines Hydraulikzylinders - den Kragarm relativ zur Halterung der mittleren Bürste verschwenkt, so wird dadurch die Rotationsachse dieser beweglichen äußeren Bürste parallel verlagert, also in ihrem Zwischenwinkel zu den Rotationsachsen der anderen beiden Bürsten nicht verstellt, aber dennoch von der Mitte des Parabolspiegels weg verfahren.

Wenn es bei einem öfters auftretenden Hindernis wie etwa der Halterung des Zentralrohres notwendig ist, erfolgt dies vorzugsweise automatisch, gesteuert durch einen Sensor, beispielsweise eine vor der Bürste montierte bewegliche Taststange, die beispielsweise die Sprühleiste selbst sein kann, oder einem berührungslosen optischen Sensor.

Dabei ist in der Regel jede Bürste von einem eigenem Hydraulikmotor angetrieben, vorzugsweise sind die Hydraulikmotoren jedoch in Reihe miteinander geschaltet und nicht separat angesteuert.

Um das Reinigungsergebnis zu verbessern, ist vorzugsweise hinter den Bürsten eine Abziehlippe angeordnet, um die hinter den Bürsten auf der Fläche verbleibenden Restflüssigkeit abzuziehen und deren Verdunstung möglichst zu vermeiden.

Durch Schrägstellung der Abziehlippe, also mit oberem Ende vor dem unteren Ende, wird die abzuziehende Flüssigkeit zusätzlich nach unten geleitet und möglichst über die Unterkante der Fläche abgeführt, also abgetropft.

Analog dazu können auch - in der Aufsicht auf die zu reinigende Fläche - die Rotationsachsen der Bürsten ebenfalls schräg zur Fortschrittsrichtung, also nicht exakt 90° zur Längsrichtung, gestellt werden.

Die Borsten sind dabei auf dem zylindrischen oder ballig konvexen Zentralkörper einer solchen rotierenden Bürste in der Regel nicht einzeln, sondern büschelweise aufgebracht. Die Borsten sind an einer flexiblen Borstentragplatte aus einem gummiähnlichen Material befestigt, welche dann auf dem Grundkörper fixiert, beispielsweise verschraubt werden.

Vorzugsweise sind bei einem balligen Zentralkörper diese Borstentragplatten bandförmig und insbesondere quasi-endlos ausgebildet und helixförmig auf dem Zentralkörper aufgewickelt und fixiert.

Ein Problem besteht darin, die Reinigungsköpfe der beiden Auslegerarme exakt entlang der zu reinigenden Fläche zu führen, die relativ empfindlich ist und außer mit den Borsten des Reinigungskopfes mit keinen festen Bestandteilen des Reinigungskopfes oder des Auslegerarmes in Berührung kommen darf.

Angesichts eines nicht immer ebenen Untergrundes auf der Fahrstrecke für das Fahrzeug und einer Länge der Auslegerarme von 6 m bis 8 m ist eine ständige Führung der Reinigungsköpfe entlang der zu reinigenden Fläche notwendig.

Zu diesem Zweck weist jeder Reinigungskopf mindesten einen, besser in Querrichtung zur Fortschrittsrichtung zwei, insbesondere berührungslose, beispielsweise optische Sensoren oder Ultraschallsensoren oder Radar-Sensoren, auf, mit denen prägnante insbesondere längs verlaufende Elemente der zu reinigenden Fläche, beispielsweise die Außenkante der zu reinigenden Rinne oder die Mittelnut der zu reinigenden Rinne, oder auch das Zentralrohr abgetastet wird.

Diese Sensoren sind über eine Steuerung mit den Stellzylindern verbunden, die die Relativstellungen des Reinigungskopfes zum Auslegerarm sowie die Auslegerarmteile zueinander, also auch des Auslegerarmes zum Fahrzeug, ständig und automatisch entsprechend der Signale der Sensoren nachregeln.

Zu diesem Zweck kann vorzugsweise auch an der Basis des Reinigungsgerätes, in der Regel dem Trägerfahrzeug, ebenfalls wenigstens ein Sensor, vorzugsweise auf jeder Seite der Basis bzw. des Trägerfahrzeuges, vorhanden sein, um den seitlichen Abstand des Fahrzeuges zu der zu reinigenden Fläche abzutasten und nachzuregeln, damit das Fahrzeug immer in einem solchen Abstand zur zu reinigenden Fläche fährt, dass die zu reinigende Fläche innerhalb des erreichbaren Arbeitsbereiches für die Reinigungsköpfe liegt.

Aus dem gleichen Grund ist an dem Reinigungs-Fahrzeug auch vorgesehen, dass dessen Federung, zumindest wahlweise auf nur einer Seite, nämlich jeweils derjenigen Seiten, auf die die Auslegerarme hinausragen, blockiert werden kann.

An der ungelenkten Achse, in der Regel der Hinterachse, ist hierfür eine einfache vertikale verriegelbare Achsstütze zwischen Chassis und Radnabe ausreichend. An einer gelenkten Achse wie der Vorderachse wird dies in der Regel mit einem Torsions-Zusatzrahmen, der ebenfalls verriegelbar ist und mit seinem freien Enden an der Radeinheit angreift, erreicht.

Darüber hinaus ist am Fahrzeug oder am Reinigungs-Gerät wenigstens eine Kamera angeordnet, die auf den hinten arbeitenden Reinigungskopf gerichtet ist, und ihre Bilder auf einem Monitor in der Fahrerkabine wiedergibt.

Darüber hinaus werden Möglichkeiten zur Minimierung des Verbrauchs an Reinigungsflüssigkeit, also insbesondere Wasser, vorgesehen.

Zum einen ist dies eine zusätzliche Vorreinigung vor der Hauptreinigung (mittels rotierender Bürsten in Flüssigkeit) als Grobreinigung:
Dies kann entweder eine Vorreinigung mittels trockenem Abbürsten sein, auch mittels rotierender Bürsten, oder - was bevorzugt wird - eine Vorreinigung durch Abblasen mittels Druckluft oder/und Lösen des vorhanden Schmutzes mittels Vibrationen, insbesondere mittels Ultraschall.

Sofern ein Abblasen mittels Druckluft, etwa durch Druckluftauslässe entlang einer Druckluftleiste, vorgesehen ist, wird bevorzugt, der davon aufgewirbelte Staub von einer in Blasrichtung vor den Druckluftdüsen liegenden Saugleiste eingesaugt, denn ansonsten würde sich der aufgewirbelte Staub lediglich an anderer Stelle erneut wieder auf den zu reinigenden Flächen ablagern.

Um den Aufwand für große Gebläse zum Betreiben der Saugleiste einzusparen, wird in der Saugleiste Unterdruck vorzugsweise nach dem sogenannten Ejektorverfahren erzeugt, wobei die zum Erzeugen des Unterdruckes benutzte Druckluft gleichzeitig die Druckluft sein kann, mit der die Druckluftauslässe betrieben werden. Dies ergibt eine sehr kompakte, klein bauende Vorreinigungseinheit.

Eine andere Möglichkeit besteht darin, das für die Reinigung verwendete Wasser nicht von den Rinnen abtropfen und im Untergrund versickern zu lassen, sondern stattdessen aufzufangen, zu reinigen und wieder zu verwenden.

Dies ist auch aus einem anderen Grunde geboten, da das immer an der Unterkante der Reflektorrinnen abtropfende Reinigungswasser dort eine so gute Bewässerung des Bodens bewirken würde, dass in kurzer Zeit mit einem starken Pflanzenbewuchs an diesen Stellen, der dann wieder gemäht werden müsste, zu rechnen wäre.

Zu diesem Zweck wird die verunreinigte Reinigungsflüssigkeit an der Unterkante der zu reinigenden Fläche aufgesammelt, in einen Sammelbehälter des Reinigungsgerätes verbracht und dort zur Wiederaufbereitung, insbesondere Filterung, zwischengelagert.

Dies erfolgt beispielsweise mittels einer Auffangwanne oder einer Auffangrinne, die über nur eine begrenzte Strecke der Unterkante sich erstreckend am Reinigungskopf befestigt sein kann.

Dabei würde das Aufsammeln in einem Zwischenbehälter des Reinigungsgerätes erfolgen.

Dabei besteht ein Problem darin, dass die Reflektorrinnen aus einzelnen Platten zusammengesetzt sind, zwischen denen kleine Fugen vorhanden sind, die sowohl in Längsrichtung der Reflektorrinne als auch in Querrichtung hierzu verlaufen.

Da das Wasser entlang der Reflektorrinnen schwerkraftbedingt zur Unterkante fließt, stören hierbei vor allem die in Längsrichtung der Rinne verlaufenden Fugen, wobei es sich in aller Regel nur um eine einzige, in der Mitte, also in der Symmetrieebene der Reflektorrinne, liegende Längsfuge handelt.

Denn über diese Längsfuge fließt das Wasser, welches beim Reinigen des oberen Rinnenbereiches durch den vordersten Reinigungskopf aufgebracht wurde, aus der Rinne heraus und geht normalerweise verloren, zumal an dieser Stelle kaum eine Möglichkeit besteht, eine Auffangwanne am Reinigungskopf anzuordnen, da hier in regelmäßigen Abständen auch die Aufständerungen der Drehachse der Rinnen im Weg sind.

**Es** wird daher vorgeschlagen, diese Längsfuge abzudecken, insbesondere mittels eines Kunststoffprofils so abzudecken, dass das von der oberen Rinnenhälfte herablaufende Wasser weitergeleitet wird auf die zu reinigende Fläche der unteren Rinnenhälfte und dort zur Unterkante der Rinne läuft, wo es aufgesammelt werden kann.

Eine weitere Möglichkeit, den Wasserverbrauch zu minimieren und die Reinigungswirkung zu verbessern, besteht darin, Wasser mit verringerter Oberflächenspannung zu verwenden, welches entsprechend schnell und bevor es verdunsten kann, zur Unterkante der Reflektorrinne rinnt.

Dies kann erreicht werden, indem die Reinigungsflüssigkeit, also insbesondere das Wasser, einem elektrischen Feld ausgesetzt wird und zwar entweder direkt im Bereich der Reinigungsköpfe und/oder im Bereich der Zuführungen der Reinigungsflüssigkeit zu den Reinigungsköpfen.

Zu diesem Zweck kann beispielsweise jeder Reinigungskopf einen eigenen E-Feldgenerator aufweisen, der ein starkes elektrisches Feld insbesondere von mindestens 50 V/m, besser 200 V/m, erzeugt.

Ein solcher E-Feldgenerator kann sehr klein, kompakt und billig hergestellt werden, indem er wenigstens eine Teslaspule, also in einer Ebene gewickelte Spiralspule, sowie einen mit dieser Teslaspule elektrisch verbundenen Strahler, etwa einen Kugelstrahler, umfasst, wobei die Teslaspule als Primärspule verwendet wird, die gegenüber einer Primärspule arbeitet, die vorzugsweise wiederum eine Teslaspule ist, und die von einem Impulsgenerator betrieben wird, so dass sich der ergebende Schwingkreis in Resonanz befindet.

Bei einem Reinigungsfahrzeug, welches ein beschriebenes Reinigungsgerät trägt, ist vorzugsweise der eine, vorne arbeitende, lange Auslegerarm vor der Front des Fahrzeuges und der kürzere, weiter hinten arbeitende Auslegerarm hinter der Fahrerkabine, insbesondere auf der Ladefläche oder am Heck des Fahrzeuges, angeordnet.

Dabei wird die Befestigung am Heck bevorzugt, da dann die Ladefläche zum Anordnen eines Tanks für Reinigungsflüssigkeit, insbesondere Wasser, und gegebenenfalls eines Zwischenbehälters für die aufgefangene, verschmutzte Reinigungsflüssigkeit zur Verfügung steht.

### c) Ausführungsbeispiele

Ausführungsformen gemäß der Erfindung sind im Folgenden beispielhaft näher beschrieben. Es zeigen:
- Fig. 1a, 1b:: das Fahrzeug 50 mit Reinigungsgerät 1 in Seitenansicht und Frontansicht, jeweils in der Arbeitsstellung,
- Fig. 1c:: ein Detail eines Auslegerarmes 2,
- Fig. 2a, 2b:: die zu reinigenden Reflektorrinnen einzeln und in Gesamtanordnung,
- Fig. 3a:: einen Reinigungskopf 3a bestückt mit Bürsten,
- Fig. 3b:: den Reinigungskopf der Figur 3a ohne Bürsten im montierten Zustand,
- Fig. 3c:: den Reinigungskopf in Explosionsdarstellung,
- Fig. 4:: unterschiedliche Reinigungsköpfe,
- Fig. 5:: den Reinigungskopf der Figur 3 in der Seitenansicht im Einsatz und
- Fig. 6:: einen Reinigungskopf, bei dem eine von drei Bürsten beweglich ist.

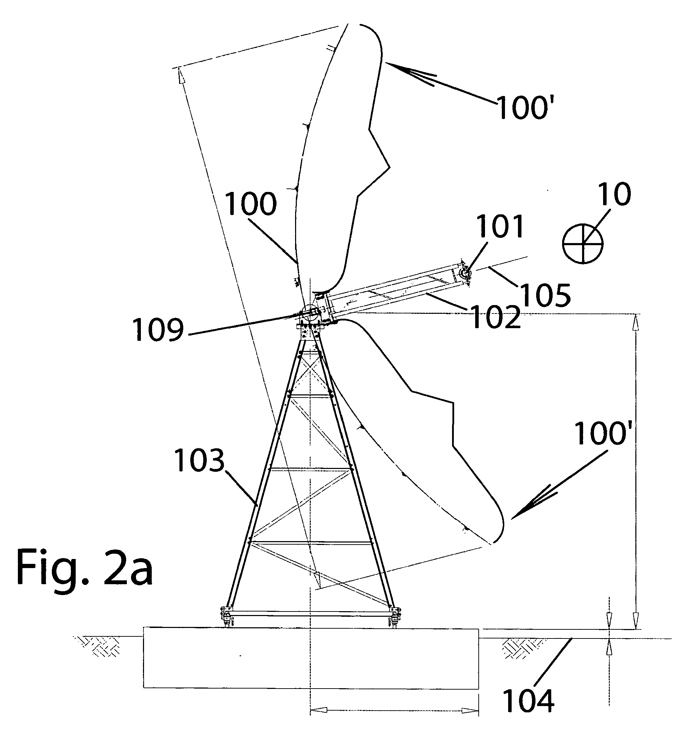

**Figur 2a** zeigt die Ausgangssituation, nämlich eine einzelne Reflektorrinne 100 eines solarthermischen Kraftwerks, deren konkave Innenfläche 100' das Sonnenlicht auf ein Zentralrohr 101 bündelt, in dem eine Wärmeträgerflüssigkeit zirkuliert, die entfernt von den Reflektorrinnen 100 zur Stromerzeugung z. B. mittels einer Dampfturbine genutzt wird.

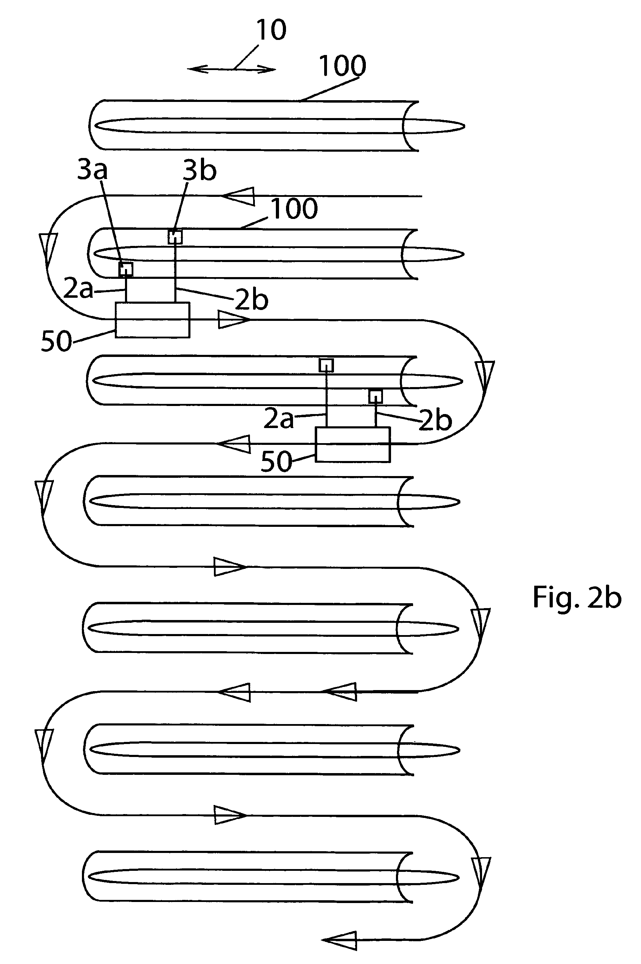

In solarthermischen Kraftwerken sind solche Reflektorrinnen 100 in großer Zahl etwa parallel verlaufend auf dem Untergrund mittels Traggestell aufgebaut, wie in Figur 2b dargestellt, und ihre konkave Innenfläche ist die mittels des erfindungsgemäßen Reinigungsgerätes 1 zu reinigende Fläche 100', die vor allem von Staubablagerungen regelmäßig befreit werden muss, um den Reflektionsgrad der Fläche 100' und damit die Effizienz des solarthermischen Kraftwerkes hoch zu halten.

Wie Figur 2a zeigt, sind die Reflektorrinnen 100 im Betrieb der Sonne nachgeführt, also mit ihrer optischen Achse 105, der Symmetrielinie der parabelförmigen Fläche 100', der Sonne zugewandt.

Das vom Wärmeträgermedium durchflossene Zentralrohr 101 befindet sich auf dieser optischen Achse im Abstand vor der Reflektorrinne 100, getragen von einer Zentralrohrhalterung 102, die von der Mitte der Reflektorrinne 100 aus aufragt.

Ferner kann die gesamte Reflektorrinne 100 um ihren Mittelpunkt 109, den Kreuzungspunkt ihres Querschnittes mit der optischen Achse 105, um die Längsrichtung 10 der profilförmigen Reflektorrinne 100 um ein Gelenk verschwenkt werden, welches sich an der Spitze eines in dieser Ansicht dreieckigen Traggestells 103 befindet.

In Figur 2a ist die Reflektorrinne 100 mit der niedrigsten Position der optischen Achse 105 dargestellt, in der das Traggestell 103 gerade noch nicht über die zu reinigende Fläche 100' ins Innere der Reflektorrinne 100 vorsteht.

Bei weiterem Absenken der optischen Achse würde dies der Fall sein, da das Traggestell 103 aus in Längsrichtung 10 beabstandeten einzelnen Dreiecken besteht, die jeweils durch entsprechende Schlitze im unteren Rinnenbereich 100 b unterhalb der Mitte 109 der Reflektorrinne, in der Reflektorrinne 100 vorhanden sind.

Um die zu reinigende Innenfläche 100' möglichst effizient zu reinigen, soll sie in Längsrichtung 10, die somit gleichzeitig die Fortschrittsrichtung des Reinigungsvorganges ist, fortlaufend gereinigt werden, und zwar im Bereich 100 a oberhalb der Mitte 109 der Reflektorrinne gleichzeitig mit dem Rinnenbereich 100 b darunter.

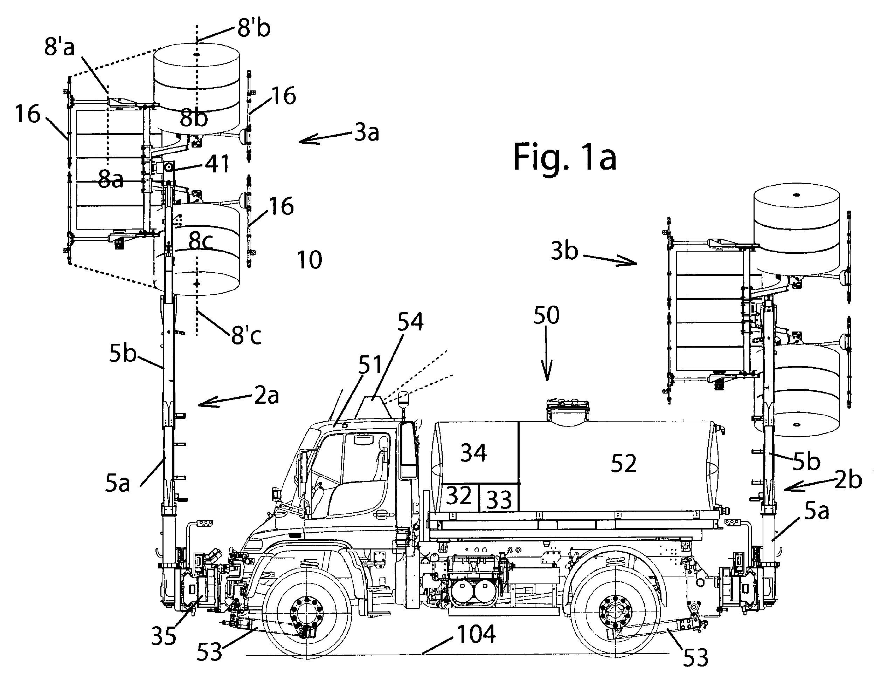

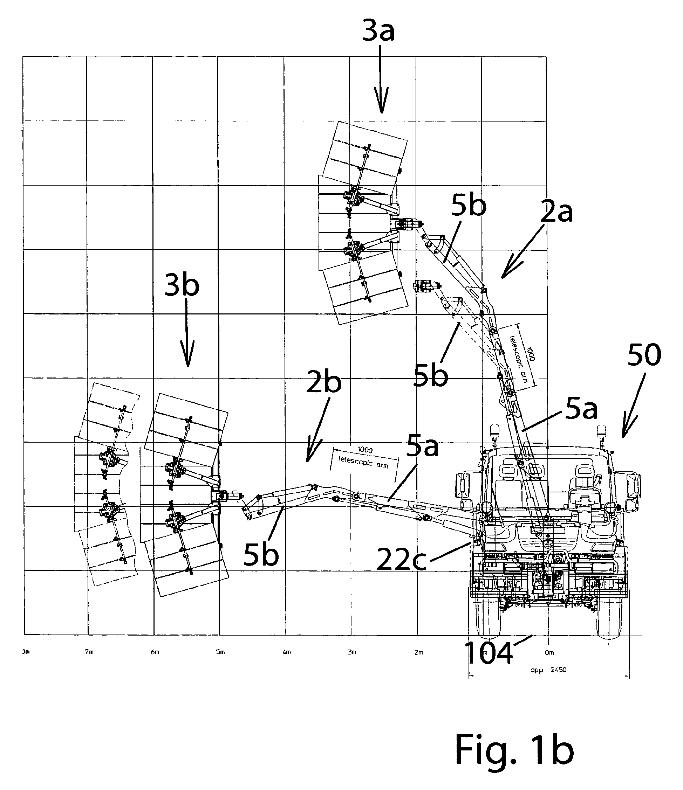

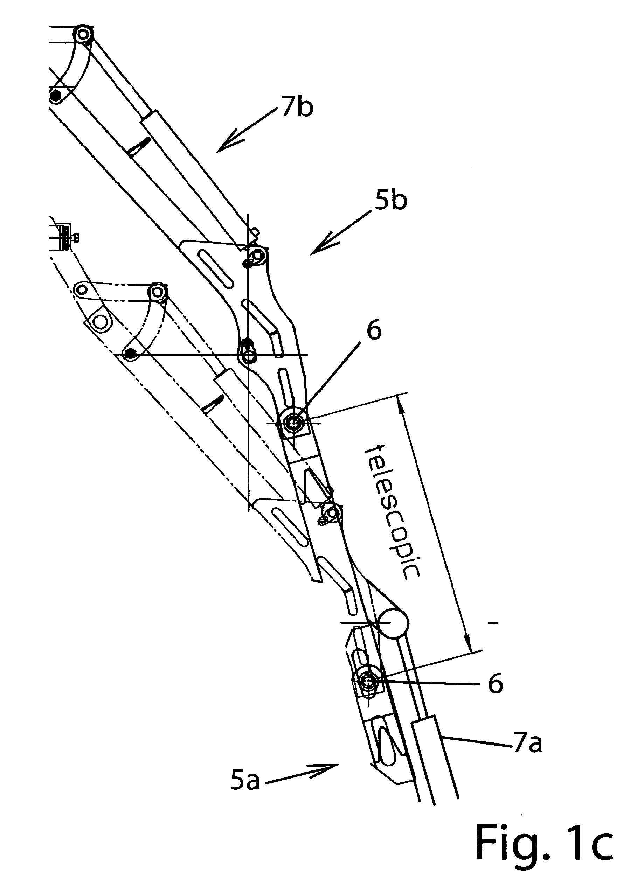

Dies soll erfindungsgemäß mittels des in den **Figuren 1** an einem Reinigungsfahrzeug 50 montierten Reinigungsgerätes 1 erfolgen, wobei das Reinigungsfahrzeug 50 aus Effizienzgründen - wie in Figur 2b dargestellt - eine Reflektorrinne 100, beispielsweise die in Figur 2b oberste Reflektorrinne 100, von rechts nach links fahrend abreinigt und dann nach Beenden dieser Reinigung am linken Ende der Rinne 100 in der nächsten Gasse zwischen den Reflektorrinnen 100 daneben wiederum am linken Ende, also lediglich nach einer Wende, einfährt und diese nächste Reflektorrinne 100 dann von links nach rechts abreinigt.

Auf diese Art und Weise werden lange Leerfahrten entlang der Reflektorrinnen 100 vermieden.

Ein Problem besteht dabei darin, dass zwar die Traggestelle 103 auf einem nivellierten Teil des Untergrundes 104, meist einem Betonsockel, aufgebaut sind, die freibleibenden und befahrbaren Gassen zwischen den parallel verlaufenden Reflektorrinnen 100 jedoch meist aus dem natürlichen Untergrund 104 bestehen, der nicht vollkommen eben ist und zusätzlich der natürlichen Erosion durch Sonne, Wind, zum Teil Pflanzenbewuchs etc. ausgesetzt ist was Schwankungen des darauf fahrenden Fahrzeuges 50 verursacht.

Zusätzlich soll - wie in **Figur 2b** dargestellt - das Fahrzeug 50 am Ende einer Gasse wenden und in den Beginn der nächsten Gasse einbiegen, also ohne lange Leerfahrten dazwischen, was das Verschwenken der Auslegerarme 2a, b von der linken auf die rechte Seite des Fahrzeuges 50 und umgekehrt erfordert.

Das erfindungsgemäße Reinigungsgerät 1 umfasst - wie am besten in den **Figuren 1a** **und** **1b** zu erkennen - aus jeweils einem Auslegerarm 3a, 3b, von denen der eine vor der Front des Fahrzeuges 50 und der andere am Heck des Fahrzeuges 50 montiert ist, und die an ihrem freien Ende jeweils einen Reinigungskopf 3a bzw. 3b tragen.

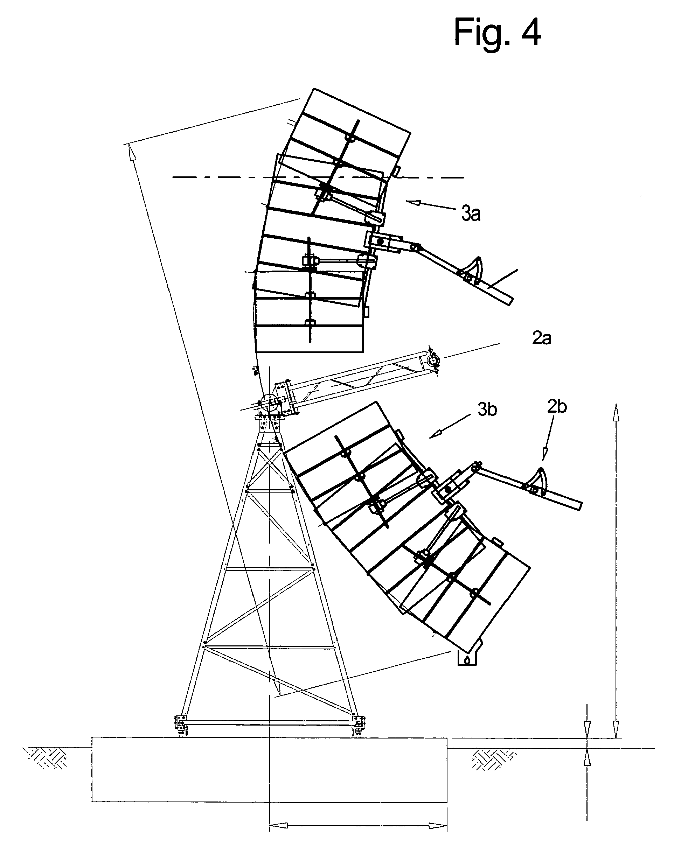

Das Reinigungsfahrzeug 50, welches unter anderem einen Vorratsbehälter 52 für die Reinigungsflüssigkeit, meist entkalktes Wasser, trägt, fährt dabei in der Gasse zwischen zwei Reflektorrinnen 100, und die seitliche Auskragung sowie Höhe der Auslegerarme 2a, b als auch die Neigung der Reinigungsköpfe 3a, 3b am jeweiligen Auslegerarm 2a, 2b wird dabei entweder vom Bediener manuell oder automatisch so gesteuert, dass der Reinigungskopf 3a, der am längeren, vorderen Teleskoparm 2a befestigt ist, in der Arbeitsstellung den Rinnenbereich 100 a oberhalb der Mitte 109, also dem Zentralrohr 101, der Reflektorrinne 100 reinigt, und der andere Reinigungskopf 3b in Längsrichtung 10 nach hinten versetzt gleichzeitig den unteren Rinnenbereich 100 b, indem er am hinteren Auslegerarm 2b befestigt ist, wie dies in Figur 4a vergrößert in Längsrichtung 10 der Reflektorrinne 100 dargestellt ist.

Dabei wird mit dem Reinigungskopf 3a des vorderen Teleskoparmes 2a primär deshalb der obere Rinnenbereich 100a gereinigt, da hierbei der diesen Reinigungskopf 3a tragende Teleskoparm 2a vor dem Zentralrohr 101 in geringem Abstand herum verlaufen muss und dies von dem in der Fahrerkabine 51 des Reinigungsfahrzeuges 50 sitzenden Bediener gut einsehbar gesteuert werden muss, um Beschädigungen an dem empfindlichen Zentralrohr 101 vor allem durch den Ausleger 2a unbedingt zu vermeiden, da eine solche Beschädigung zu einer Betriebsunterbrechung zumindest eines Teils des solarthermischen Kraftwerkes führen würde.

Da die Reinigung mit einer Reinigungsflüssigkeit geschieht, läuft diese Reinigungsflüssigkeit schwerkraftbedingt auch im oberen Rinnenbereich 100a nach unten, und sofern keine Horizontalfuge zwischen oberem und unterem Rinnenbereich 100b vorhanden ist, was insbesondere durch Anbringen einer Abdeckleiste 106 gemäß Figur 4a erreicht werden kann, fließt diese Reinigungsflüssigkeit aus dem oberen Rinnenbereich 100a in den unteren Rinnenbereich 100b ab und wird dort anschließend von dem nachfolgenden unteren Reinigungskopf 3b erfasst und zum einen ein zweites Mal dort zur Reinigung verwendet, als auch von dem Reinigungskopf 3b und anschließend schwerkraftbedingt zur Unterkante 107 der Reflektorrinne 100 bewegt.

Dort kann es durch eine Auffangvorrichtung 28 wieder gesammelt werden, indem es in eine Auffangrinne 29 abtropft, die entweder über die gesamte Länge der Reflektorrinne 100 durchgehend fest montiert und mit einem Ablauf in einem Sammelbehälter verbunden ist, oder die als Rinnenstück am unteren Ende des unten reinigenden Reinigungskopfes 3b befestigt ist, wie in Figur 4a dargestellt und mit einem Zwischenbehälter 34 für aufgesammelte Reinigungsflüssigkeit verbunden ist, aus dem die Reinigungsflüssigkeit in einer Wiederaufbereitungsanlage 32, die auch einen Schmutzfilter 33 umfasst, wieder aufbereitet und dem Vorratsbehälter 52 erneut zugeführt werden kann.

Damit die Auslegerarme 2a in einer gegen das Reinigungsfahrzeug 50 eingeklappten Parkstellung, wie sie bei Leerfahrten des Fahrzeuges 50 benutzt wird, nicht zuweit seitlich und nach oben über das Fahrzeug 50 vorstehen und um überhaupt die in ca. 8 m Höhe liegende Oberkante der Reflektorrinne 100 erreicht, ist wenigstens ein Armteil 5a, b, insbesondere beide Armteile 5a, b, zumindest des längeren, vorderen Auslegerarmes 2a, b, die über ein Gelenk 6 gelenkig miteinander verbunden sind, in seiner Erstreckungsrichtung teleskopierbar.

Dabei ist der Stellzylinder 7a, der die Schwenkstellung der beiden Armteile 5a, 5b zueinander um das Gelenk 6 vorgibt, nur beim langen Auslegerarm 2a auf der Außenseite des Zwischenwinkels 9 zwischen diesen beiden Armteilen 5a, b angeordnet, wie Figur 1c zeigt, um den gesamten Zwischenwinkel 9 für die kollisionsfreie Annäherung an das Zentralrohr 101 zur Verfügung zu haben.

Wie **Figur 1c** ferner zeigt, ist bevorzugt der untere, also am Fahrzeug 50 und der dortigen Basis des Reinigungsgerätes 1 befestigte, Armteil 5a teleskopierbar, während der obere Armteil 5b nicht teleskopierbar ist.

Figur 1c zeigt den unteren Auslegerarm 2 durchgezogen in der teleskopierten und gestrichelt in der nicht teleskopierten Stellung.

Der zweite Stellzylinder 7b gibt die Schwenkstellung des Reinigungskopfes gegenüber dem freien Ende des Auslegerarmes 2a, b vor, betrachtet in Längsrichtung 10 der Reflektorrinne 100, also der Fortschrittsrichtung 10 des Reinigungskopfes.

Da der Untergrund 104, auf dem das Reinigungsfahrzeug 50 zwischen den Reflektorrinnen 100 fährt, nicht vollkommen eben ist, schwanken bei unveränderter Stellung der Auslegerarme 2a, b und Reinigungsköpfe 3a, b relativ zueinander sowie zum Reinigungsfahrzeug 50 die Reinigungsköpfe 3a, b in ihrer Position dennoch erheblich, und könnten die Reflektorrinne 100 und insbesondere das Zentralrohr 101 beschädigen, sofern nicht mit einer sehr niedrigen Fahrgeschwindigkeit gefahren und permanent vom Bediener manuell aufmerksam die Position der Reinigungsköpfe 3a, b nachgeregelt wird.

Um dies zu verbessern, ist gemäß **Figur 4** am oberen Reinigungskopf 3a ein Sensor 20a angeordnet, der berührungslos die z. B. Oberkante 108 der Reflektorrinne 100 abtastet, insbesondere kontaktlos, optisch abtastet.

Ebenso oder stattdessen kann am unteren Reinigungskopf 3b ein analoger Sensor 20b zum Abtasten der Unterkante 107 der Reflektorrinne 100 angeordnet sein.

Diese Sensoren 20a, b sind mit einer Steuerung 35 des Reinigungsgerätes 1 verbunden, die aufgrund dieser Signale den Teleskopierzustand der teleskopierbaren Anteile 5a und/oder b, sowie die Winkelstellung zwischen den einzelnen Komponenten, also Reinigungskopf 3a, b, Auslegerarm 2a, b, den Armteilen 5a, b und der Basis des Reinigungsgerätes am Reinigungsfahrzeug 50, automatisch nachführt.

Dies kann durch einen weiteren Sensor 22c unterstützt werden, der nicht an einem der Reinigungsköpfe 3a, b, sondern vorzugsweise an der Basis des Reinigungsgerätes 1, also nahe am Reinigungsfahrzeug 50 oder direkt am Reinigungsfahrzeug 50, befestigt ist und ebenfalls eine markante längsverlaufende Kontur der Reflektorrinne 100, in der Regel deren Unterkante 107, abtastet, vorzugsweise wiederum optisch und berührungsfrei abtastet.

Die Signale eines solchen fahrzeugseitigen Sensors 22c können entweder direkt in die Lenkung des Fahrzeuges mittels der Steuerung 35 eingreifen oder auch lediglich ein z.B. akustisches Warnsignal für den Fahrer abgegeben, falls dieser mit dem Fahrzeug zu nahe an oder zu weit weg von der zu reinigenden Reflektorrinne 100 fährt, so dass der entstehende Abstand von den Auslegerarmen 2a, nicht mehr bewältigt werden kann.

Um unerwünschte Bewegungen der Reinigungsköpfe 3a, b aufgrund der Federungsbewegungen des Fahrzeuges 50 auf dem unebenen Untergrund zu vermeiden, kann die Federung des Fahrzeuges 50 zumindest auf der Seite, auf welche die Ausleger 2a, b momentan hinausragen, verriegelt werden: In **Figur 1a** ist die Schwinge eines Torsions-Zusatzrahmens 53 zu erkennen, der mit seinem mittleren Schenkel quer verlaufend am Heck bzw. an der Front des Fahrzeuges 50 befestigt ist und von dem aus frei endende Schenkel mit ihren freien Enden an den Radeinheiten befestigt sind, deren Drehung um den zentralen Schenkel automatisch verriegelt werden kann.

Um vor allem den hinten arbeitenden Reinigungskopf 3b genauer führen zu können, ist am Fahrzeug 50 eine Kamera 54 angebracht, die auf den hinteren Reinigungskopf 3b gerichtet ist und deren Signale auf einem nicht dargestellten Monitor in der Fahrerkabine 51 wiedergegeben werden.

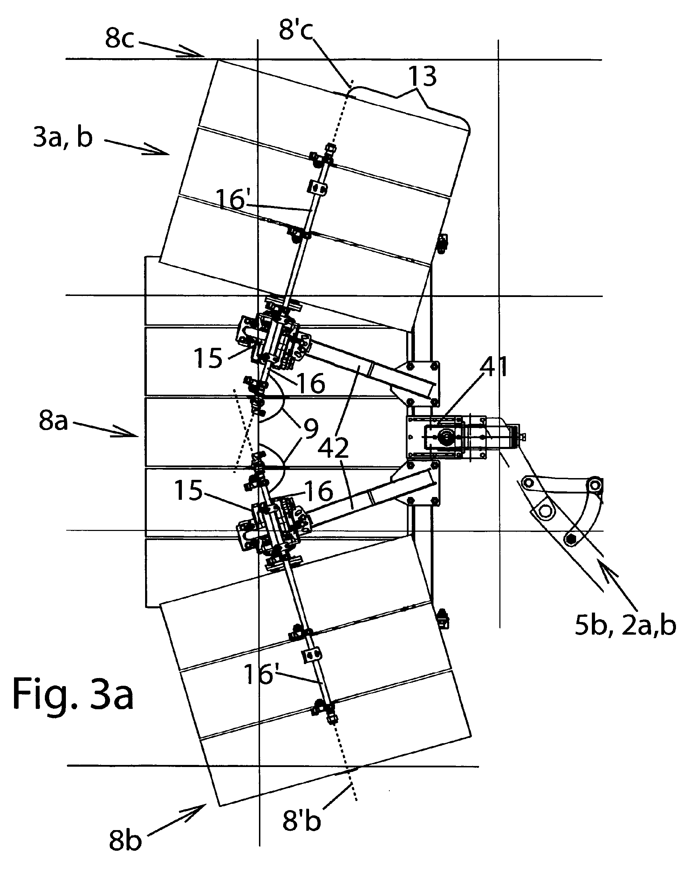

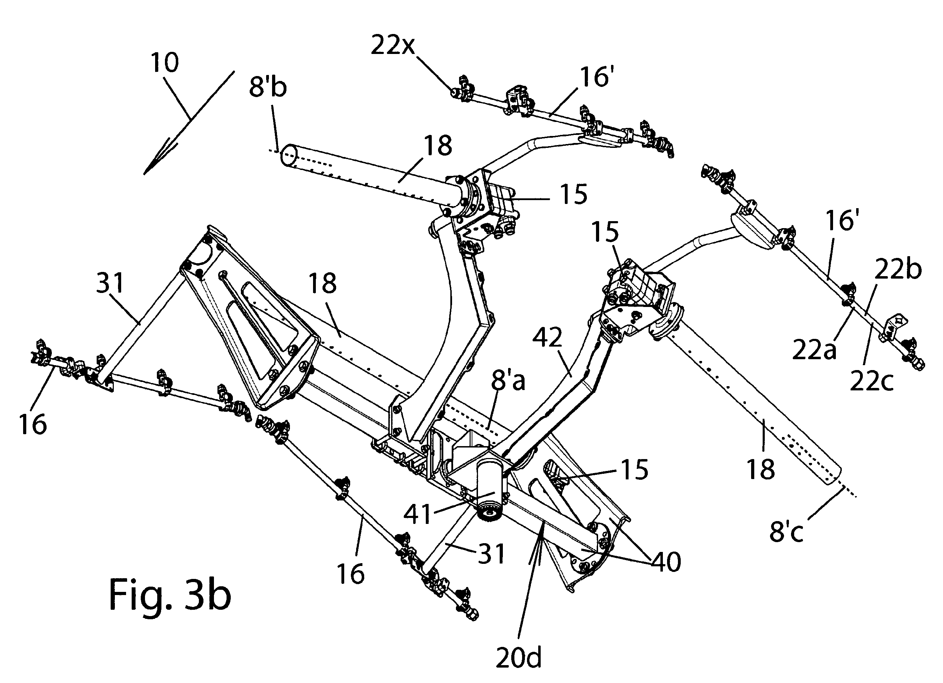

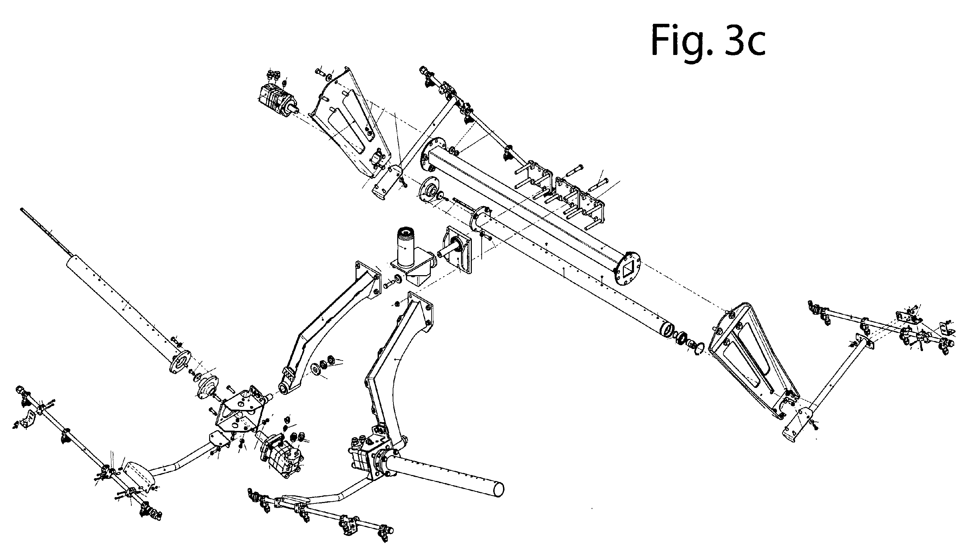

Die **Figuren 3** **als auch 4** zeigen in einer vergrößerten Darstellung die Reinigungsköpfe 3a, b in der Regel identisch gegenüber der Gesamtdarstellung der Figur 1a dessen Aufbau, der für beide Reinigungsköpfe 3a, b in der Regel identisch ist:
Wie am besten **Figur 3a** und im Einsatz an der Reflektorrinne 100 **Figur 4** zeigen, besteht jeder Reinigungskopf 3a, b aus drei rotierenden, zylindrischen Bürsten 8a, b, c, deren Rotationsachsen 8'a, b, c in Fortschrittsrichtung 10 des Reinigungsvorganges, also quer zu den Rotationsachsen 8'a, b, c betrachtet, nicht parallel sondern um einen jeweils geringen Zwischenwinkel zueinander versetzt sind, so dass die Außenkontur des Reinigungskopfes einen Polygonbezug ergibt, der in etwa der Krümmung der zu reinigenden Fläche 100' entspricht.

Die Bürsten 8a, b, c sind vorzugsweise nur dann zylindrisch, wenn sie rotieren, also die Borsten der Bürsten aufgrund der Fliehkraft radial zum jeweiligen Zentralkörper 18a, also der Rotationsachse 8'a, b, c, stehen, da die Borsten in der Regel eine so geringe Eigensteifigkeit haben, dass sie bei Stillstand der Rotation schlaff nach unten hängen.

Damit trotz der Winkelstellung der drei Bürsten 8a, b, c zueinander auf der zu reinigenden Fläche 100' keine ungereinigten Bereiche dazwischen verbleiben, überlappen die Bürsten 8a, b, c sich in ihrer Längsrichtung, und zwar an der Außenkontur des Reinigungskopfes 3, nur geringfügig, aufgrund der Winkelstellung der Rotationsachsen auf der Innenseite dagegen deutlich mehr.

Aus diesem Grund liegen - quer zur Fortschrittsrichtung 10 betrachtet - die beiden äußeren Bürsten 8b, c etwa auf gleicher Höhe, während - was am besten in Figur 1a zu erkennen ist - die mittlere Bürste 8a vor den beiden äußeren Bürsten 8b, c läuft.

Um dies zu erreichen, ist der Reinigungskopf 3a, b - aus Übersichtlichkeitsgründen dargestellt ohne Bürsten 8a, b, c - so aufgebaut, wie in Figur 3b im Zusammenbau und in Figur 3c in Einzelteilen dargestellt.

Der aus einem zylindrischen Rohrstück bestehende Zentralkörper 18 für die mittlere Bürste 8a ist beidseits in den freien Enden eines U-förmigen Tragrahmens 40 gelagert und an einem Ende über einen Hydraulikmotor 15 drehend antreibbar.

In der Mitte des Verbindungsschenkels dieses U-förmigen Tragrahmes 40 ist die Armaufnahme 41 befestigt, mit der der Reinigungskopf 3a, b lösbar am freien Ende eines Auslegerarmes 2a oder 2b befestigt werden kann.

Über den bereits beschriebenen Stellzylinder 7b kann die Schrägstellung des Tragrahmens 40 und damit des gesamten Reinigungskopfes 3a, b gegenüber dem Auslegerarm 2a, b in der einen Querrichtung und über ein Drehgelenk in der Armaufnahme 41 die Drehlage um die Längsachse des Auslegerarmes eingestellt werden, auch während des Einsatzes vom Steuergerät 35 des Fahrzeuges 50 aus.

Die Drehlage kann dabei um 180° und mehr verändert werden, so dass unabhängig davon, ob der Auslegerarm vom Reinigungsfahrzeug 50 aus in Fahrtrichtung gesehen nach links oder nach rechts hinausragt jeweils die mittlere Bürste 8a in Fortschrittsrichtung 10 vorne arbeitet.

Ebenfalls am mittleren Schenkel des Tragrahmens 40 sind symmetrisch beidseits neben der mittigen Armaufnahme 41 zwei L-förmig gekröpfte Kragarme 42 befestigt, die in Fortschrittsrichtung 10 nach hinten weisen und mit ihrem zweiten Schenkel wie die frei endenden Schenkel des U-förmigen Tragrahmens 40 etwa in Verlaufsrichtung des Tragarmes 3a, b nach außen.

An den freien Enden dieser Kragarme 42 ist jeweils ein wiederum zylindrischer, rohrförmiger Zentralkörper 18 für je eine der Bürsten 8b, 8c, winklig, insbesondere rechtswinklig, vom Kragarm 42 nach außen abstehend einseitig und drehend antreibbar aufgenommen. Da jedoch die Kragarme 42 in einem leichten Winkel zu den äußeren freien Enden des Tragrahmens 40 verlaufen, stehen auch die Rotationsachsen 8'b und 8'c dieser rotierend antreibbaren, äußeren Grundkörper 18 im Winkel zueinander und auch jeweils in einem geringen Winkel windschief zum mittleren Grundkörper 18 und damit der Rotationsachse 8'a der mittleren Bürste 8a, betrachtet auf die durch diese Rotationsachsen definierte Achsen-Ebene.

Zum Antrieb dieser beiden äußeren Grundkörper 18 ist am Lagerungsende, also am Kragarm 42, jeder von einem separaten Hydraulikmotor 15 angetrieben.

Um mit der äußeren Bürste z. B. 8b um z. B. die Zentralrohrhalterung 102 herumfahren zu können, ohne den gesamten Bürstenkopf in seiner Lage relativ zur Reflektorrinne 100 verändern zu müssen, besteht eine Alternative darin, den Zentralkörper 18 dieser Bürste, z. B. 8b, verschwenkbar, beispielsweise mittels eines Hydraulikzylinders, gegenüber dem Ende des ihn tragenden Tragarmes 42 zu befestigen.

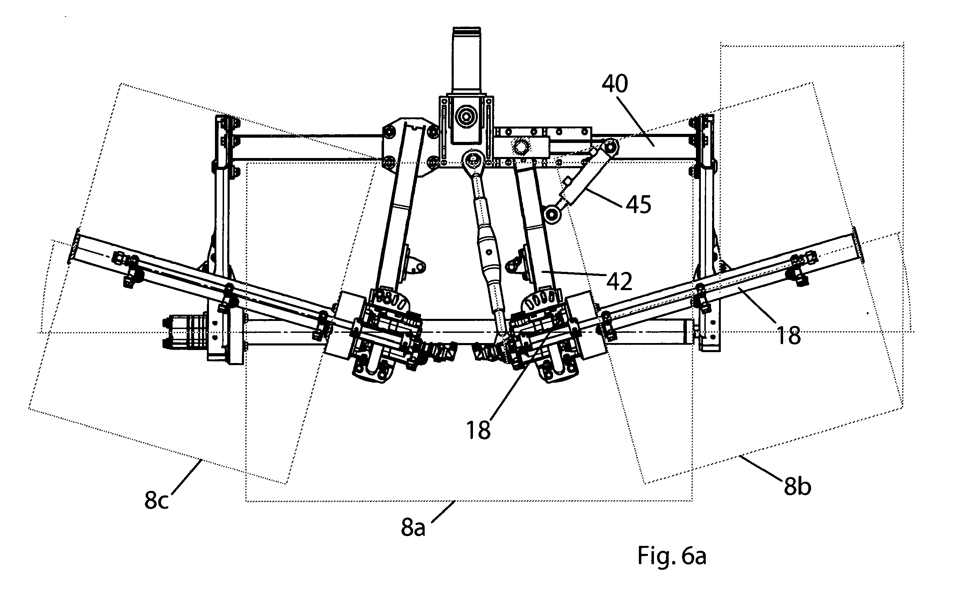

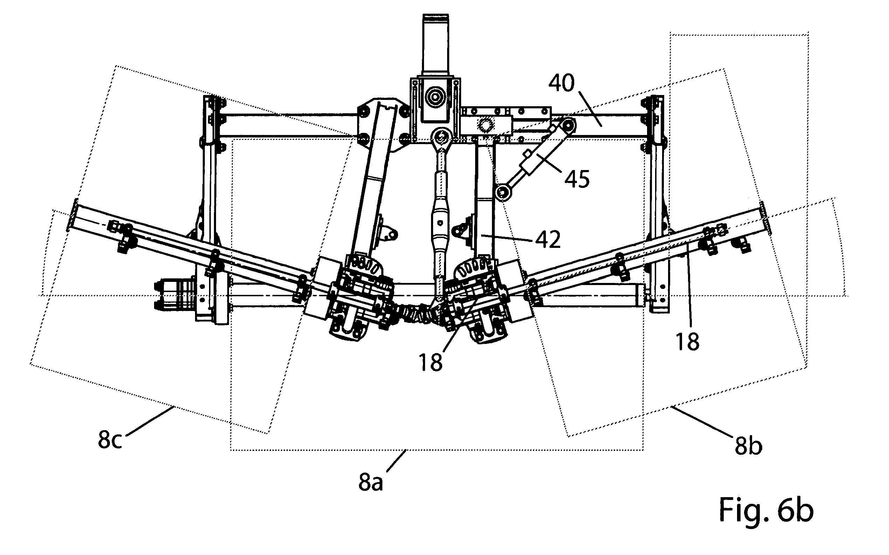

Eine andere Alternative besteht darin, diesen Zentralkörper 18 der Bürste z. B. 8b gemäß der **Figuren 6** zu verlagern, und zwar eine Parallelverlagerung des Grundkörpers in Richtung Mitte des Reinigungskopfes 3a bzw. 3b, ohne dass der Zwischenwinkel der Rotationsachse 8'b dieses Zentralkörpers gegenüber den Rotationsachsen 8'c und 8'a der anderen Bürsten verändert wird.

Dies wird erreicht, indem der Kragarm 42 - in der Aufsicht auf die Achsen-ebene betrachtet - Teil eines Parallelogramms ist, dessen vier Streben relativ zur jeweils benachbarten Strebe gelenkig verbunden ist. Der Kragarm 42 ist einer der beiden längeren Schenkel des Parallelogramms, die beide mit ihren benachbarten Enden an dem Tragrahmen 40 der mittleren Bürste 8a gelenkig befestigt sind, die damit einen kurzen Schenkel des Parallelogramms darstellt. Den anderen kurzen Schenkel des Parallelogramms bildet der über den Gelenkpunkt mit dem Kragarm 42 hinaus verlängerte Zentralkörper 18 dieser beweglichen äußeren Bürste 8b.

Ein Stellzylinder 45, beispielsweise ein Hydraulikzylinder, der von der Steuerung des Reinigungsgerätes aus ansteuerbar ist, ist einerseits am Tragrahmen 40 und andererseits am Kragarm 42 beabstandet von deren Gegenseitigen Gelenkpunkt befestigt. Durch Ausfahren des Stellzylinders 45 wird die

Winkelstellung des Kragarms 42 zum Tragrahmen 40 verändert, wie in den Figuren 6a und 6b dargestellt, wobei jedoch wegen des Parallelogramms der Befestigungspunkt des Grundkörpers 18 an dem Kragarm 42 Richtung Mitte des Reinigungskopfes verschwenkt wird, aber unter gleich bleibender Winkelstellung zum Tragrahmen 40.

Ferner sind in den **Figuren 3** die Sprühleisten 16, 16' zu erkennen, die aus Rohren bestehen, in deren Längsverlauf eine Vielzahl von Austrittsöffnungen 22a, b, c... für Reinigungsflüssigkeit angeordnet sind, die so positioniert sind, dass die Reinigungsflüssigkeit auf die zugeordnete rotierende Bürste und/oder den von dieser Bürste zu reinigenden Abschnitt der Fläche 100' Reinigungsflüssigkeit spritzen.

Wegen des Versatzes der drei Bürsten 8a, b, c in Fortschrittsrichtung 10 ist - wie am besten auch in Figur 1a zu erkennen - die Sprühleiste 16 der vorangehenden mittleren Bürste 8a in Fortschrittsrichtung 10 vor dieser Bürste 8a angeordnet und parallel zu deren Mantelfläche verlaufend, während die Sprühleisten 16' der beiden außen hinten laufenden Bürsten 8b, c hinter diesen Bürsten und ebenfalls parallel zu deren Mantelfläche verlaufend angeordnet sind.

Dabei erstreckt sich diese vordere Sprühleiste 16 über eine solche Breite, dass sie die gesamte Arbeitsbreite des Reinigungskopfes auf der Fläche benetzen kann, und ist zu diesem Zweck aus zwei separaten Teilen zusammengesetzt, die getrennt über Versorgungsleitungen 31 mit Flüssigkeit versorgt werden.

Zusätzlich weist vorzugsweise jeder Reinigungskopf 3a, b in einer Sprühleiste eine Austrittsöffnung 22 x auf, deren Austrittsrichtung im Reinigungseinsatz des Reinigungskopfes 3a, b auf das Zentralrohr 101 gerichtet ist.

Bei dem oben arbeitenden Reinigungskopf 3a ist dies vorzugsweise am unteren Ende der Sprühleiste 16 der unteren äußeren Bürste 8b der Fall, bei dem unten reinigenden Reinigungskopf 3b am oberen Ende der der oberen Bürste 8c zugeordneten Sprühleiste 16.

Auf diese Art und Weise wird das Zentralrohr 101, auf dem ebenfalls Verschmutzungen auftreten, zumindest mit Reinigungsflüssigkeit abgesprüht. In einer weiteren Ausführungsform kann für das Zentralrohr 101 und dessen Reinigung auch ein separater Dritter Reinigungskopf mit wenigstens einer rotierenden Bürste vorhanden sein, der entweder an einem der beiden vorhandenen Auslegerarme mit befestigt wird, oder an einem separaten dritten Ausleger geführt ist.

Im Idealfall kann an dem oben arbeitenden Reinigungskopf 3a eine nicht dargestellte Zusatzbürste vorhanden sein, die ebenfalls rotierend angetrieben die Oberseite des Zentralrohres 101 reinigt.

Mit Blick in die Reflektorrinne 100 hinein, also quer zu deren Längsrichtung 10, etwa entsprechend der Blickrichtung der Figur 1a, sind im Reinigungseinsatz die Rotationsachsen 8' a, b, c entweder lotrecht stehend zur Längsrichtung 10 angeordnet, oder leicht geneigt, dann mit dem oberen Ende weiter vorne laufend als mit ihrem unteren Ende.

In einer bevorzugten Ausführungsform können die drei Bürsten 8a, b, c auch in Fortschrittsrichtung 10 hintereinander laufen, so dass bei entsprechender anderer Konstruktion des Grundgestells des Reinigungskopfes 3a, b die oberste Bürste 8b am weitesten vorne, die darunter laufende mittlere Bürste 8a hinter dieser obersten Bürste 8b und die am weitesten unten arbeitende Bürste 8c wiederum hinter der mittleren Bürste 8a läuft.

Dadurch würde die von jeweils einer Bürste hinterlassene verschmutzte Reinigungsflüssigkeit schwerkraftbedingt an der zu reinigenden Fläche 100' herablaufen, und von der nächst unteren Bürste wiederum erfasst werden, wodurch die Reinigungsflüssigkeit und die in ihr gelösten Verschmutzungen aktiv mittels der Bürsten zum unteren Rand des zu reinigenden Bereiches transportiert werden und die Rückstände an Reinigungsflüssigkeit auf der zu reinigenden Fläche 100' minimiert werden.

Dadurch wird auch der an Verschmutzungen nach der Reinigung verbleibende Rest - aufgrund der wieder verdunstenden Reinigungsflüssigkeit - an Verschmutzungen auf der Fläche 100' minimiert werden.

Zu diesem Zweck müsste einer der Kragarme 42 in Verlaufsrichtung nach vorne statt nach hinten auskragen.

Zusätzlich kann auf diese Art und Weise ein höherer Anteil der Reinigungsflüssigkeit an der Unterkante 7 der Reflektorrinne 100 wieder aufgefangen und wieder aufbereitet werden.

Da in der Längsmitte 109 der Reflektorrinne 100, also am Ansatzpunkt der Zentralrohrhalterung 102, in der Regel eine in Längsrichtung 10 verlaufende Fuge zwischen dem oberen Rinnenbereich 100a und dem unteren Rinnenbereich 100b vorhanden ist, wird diese Fuge mittels einer Abdeckleiste 106 so überdeckt, dass die auf dem oberen Rinnenbereich 100a herabfließende Reinigungsflüssigkeit über die Abdeckleiste 106 weiter nach unten laufen kann auf die zu reinigende Fläche des unteren Rinnenbereiches 100b und somit an der Unterkante 107 die Reinigungsflüssigkeit aufgesammelt werden kann, die in beiden Rinnenbereichen 100a, b eingesetzt wurde.

Letzteres ist in **Figur 4** dargestellt, in der der Einsatz der Bürstenköpfe 3a, b mit jeweils drei Bürsten 8a, b, c gemäß der Figuren 3 an der Reflektorrinne 100 zu sehen ist, und zusätzlich an jedem Reinigungskopf 3a, b zumindest ein Sensor 20a, b, der optisch und berührungslos im einen Fall die Oberkante und im anderen Fall die Unterkante 107 der Reflektorrinnen 100 abtastet.

Vorzugsweise ist auch an jedem Reinigungskopf 3a, b, beispielsweise am Tragrahmen 40, ein optischer Sensor 20d vorhanden, der bei rotierenden Bürsten 8a, b, c die Borstenlänge 13 misst oder zumindest detektiert, wenn diese Borstenlänge 13 unter ein vorgegebenes Mindestmaß verschleißbedingt absinkt.

Dann müssen entweder die von der Steuerung einzuhaltenden Abstände des Reinigungskopfes zur zu reinigenden Fläche 100' verringert und/oder die Borsten ausgetauscht werden, da die Reinigungswirkung stark davon abhängt, über welche Schlepplänge die einzelnen Borsten auf der zu reinigenden Fläche 100' entlang geführt werden, bevor sie wieder abheben.

Diese Schlepplänge nimmt mit Abnahme der Borstenlänge 13 stetig ab. Die Borsten sind an den Zentralkörpern 18 nicht direkt befestigt, sondern die Borsten sind an flexiblen, insbesondere bandförmigen, Borstentragplatten aus Kunststoff bündelweise befestigt, und diese Tragplatten können auf dem rohrförmigen Zentralkörper 18 aufgelegt, insbesondere aufgewickelt, und verschraubt werden.

Die entsprechenden Schrauböffnungen sind in den Figuren 3b an den Zentralkörpern 18 sichtbar.

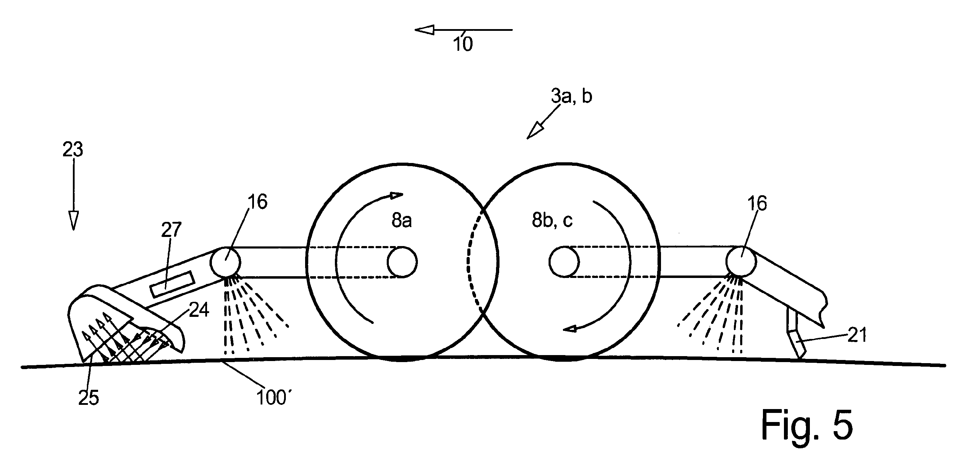

**Figur 5** zeigt in Prinzipdarstellung eine optionale Vorreinigungseinheit 23 anhand des Reinigungskopfes 3a, b gemäß der Figuren 3, die vor der bisher beschriebenen Hauptreinigung, bestehend durch Aufbringen von Reinigungsflüssigkeit und Reinigen mittels rotierenden Bürsten, durchgeführt wird, und ebenfalls an dem jeweiligen Reinigungskopf 3a, b in Fortschrittsrichtung 10 diesem vorangestellt, befestigt ist:
Dabei handelt es sich um eine weitere Sprühleiste mit einer Vielzahl von Druckluftauslässen 24, die im geringen Abstand zur zu reinigenden Fläche 100' geführt werden und Druckluft z.B. schräg nach vorne, in Fortschrittsrichtung 10 gerichtet, ausbringen:
   Der davon trocken aufgewirbelte Staub wird von der unmittelbar vor den Druckluftauslässen 24 angeordneten Sauglufteinlässen 25, beispielsweise in Form einer Saugleiste, aufgenommen und abgesaugt.

Die hierfür notwendige Saugluft kann durch einen in dem Saugluftleitung angeordneten Druckluftejektor 27 erzeugt werden, so dass für die gesamte trockene Vorreinigungseinrichtung 23 als Energiequelle lediglich Druckluft benötigt wird, die bei den meisten Reinigungsfahrzeugen 50 ohnehin an Board verfügbar ist.

Auf diese Art und Weise kann die durch die Hauptreinigung zu entfernende Staubmenge drastisch reduziert werden, ohne dass der von den Druckluftauslässen 24 aufgewirbelte Staub sich an anderer Stelle, insbesondere bereits feuchten Bereichen der Reflektorrinne 100, wieder absetzen kann.

Eine solche Vorreinigungseinrichtung 23 kann mechanisch problemlos an der Grundkonstruktion des Reinigungskopfes 3a, b, also beispielsweise dessen Tragrahmen 40, angeordnet werden und arbeitet selbstverständlich in Fortschrittsrichtung 10 noch vor der vordersten Sprühleiste 16 der z. B. mittleren Bürste 8a.

In dieser **Figur 5** ist auch die Abziehlippe 21 hinter der Nassreinigung dargestellt, die verhindert, dass zu viel Flüssigkeit auf der zu reinigenden Fläche 100' verbleibt. Das Vorhandensein der Abziehlippe 21 ist natürlich unabhängig vom Vorhandensein der trockenen Vorreinigungs-Vorrichtung.

**Figur 5** zeigt ferner, dass sich die Bürsten 8a, b, c so drehen, dass im Kontakt mit der zu reinigenden Fläche 100' sich die Bürsten Fortschritts-Richtung 10 bewegen. Die vordere Sprühleiste 16 benetzt daher die Fläche 100' über die gesamte Arbeitsbreite des Reinigungskopfes, während die in Fortschrittrichtung dahinter angeordnete Sprühleiste 16' lediglich ein nachträgliches zusätzliches Abspülen der Fläche 100' bewirkt, die rein optional ist.

### BEZUGSZEICHENLISTE

- 1: Reinigungsgerät
- 2a, b: Auslegerarme
- 2': Längenachse
- 3a, b: Reinigungskopf
- 4: Tank
- 5a, b: Armteil
- 6: Gelenk
- 7a, b: Stellzylinder
- 8a, b, c: Bürsten
- 8'a, b, c: Rotationsachsen
- 9: Zwischenwinkel
- 10: Längsrichtung, Fortschrittsrichtung
- 11: Querrichtung
- 12: Tangentialrichtung
- 13: Borstenlänge
- 14: Abstand
- 15: Hydraulikmotor
- 16: Sprühleiste
- 17: Kreuzgelenk
- 18, 18': Zentralkörper
- 18a, b: Teile
- 19: Borstentragplatte
- 20a, b, c: Sensor
- 21: Abziehlippe
- 22a, b, .x: Austrittsöffnung
- 23: Vorreinigungseinheit
- 24: Druckluftauslass
- 25: Sauglufteinlass
- 26: Ultraschallvibratoren
- 27: Druckluftejektor
- 28: Auffangvorrichtung
- 29: Auffangrinne
- 30: E-Feldgenerator
- 31: Zuführungsleitung
- 32: Wiederaufbereitungsanlage
- 33: Schmutzfilter
- 34: Zwischenbehälter
- 35: Steuerung
- 36: Teslaspule
- 37: Strahler
- 38a, b: Topfbürste
- 38'a, b: Rotationsachse
- 39: U-Bügel
- 40: Tragrahmen
- 41: Armaufnahme
- 42: Kragarm
- 43: Tragplatte
- 44a, b: Linien
- 45: Stellzylinder
- 50: Reinigungsfahrzeug
- 51: Fahrerkabine
- 52: Vorratsbehälter
- 53: Torsions-Zusatzrahmen
- 54: Kamera
- 100: Reflektorrinne
- 100a, b: Rinnenbereich
- 100': Fläche
- 101: Zentralrohr
- 102: Zentralrohrhalterung
- 103: Traggestell
- 104: Untergrund
- 105: optische Achse
- 106: Abdeckleiste
- 107: Unterkante
- 108: Oberkante
- 109: Mittelpunkt, Mitte

## Patentansprüche

1. Reinigungsgerät (1) zur Reinigung von quer zur Fortschrittsrichtung (10) gebogenen Profilflächen (100') mit
- mindestens zwei Auslegerarmen (2a, b),
- an **deren** freien Ende sich je ein Reinigungskopf (3a, b) befindet, wobei
- der Reinigungskopf (3a...) drei rotierende Bürsten (8a, b, c) umfasst, deren Rotationsachsen (8a, b, c) parallel zur Tangentialrichtung (12) der zu reinigenden Fläche (100') verlaufen und wobei die Rotationsachsen (8'a, 8'b, 8'c) schräg zueinander stehen,
**dadurch gekennzeichnet, dass**
- der Reinigungskopf (3a..) in seiner Schrägstellung zum Auslegerarm (2a, b) einstellbar und um 180° um die Längsachse (2') des Auslegerarmes (2a, b) schwenkbar befestigt ist,
- die mittlere Bürste (8a) am Auslegerarm (2a, b) gelenkig befestigt ist
- die beiden anderen Bürsten (8b, c) an der Halterung der mittleren Bürste (8a) einstellbar fixiert und einseitig fliegend gelagert sind,
- der **Zentral**körper (18) wenigstens einer der äußeren Bürsten (8b, c) in **ihrem** Endbereich an einem Kragarm (42) schwenkbar oder mit **einem** Kragarm (42) gegenüber der mittleren Bürste (8a) schwenkbar ist.

2. Reinigungsgerät nach Anspruch 1
**dadurch gekennzeichnet, dass**
die mittlere Bürste (8a) am Auslegerarm (2a) in ihrer Winkelstellung während des Betriebes automatisch einstellbar ist.

3. Reinigungsgerät nach Anspruch 1 oder 2,
**dadurch gekennzeichnet, dass**
- der Auslegerarm (2a, b) teleskopierbar ist und insbesondere aus zwei oder drei gelenkig miteinander verbundenen Armteilen (5a, b) besteht, die vorzugsweise beide teleskopierbar in ihrer Längserstreckung sind, und/oder
- nahe des Gelenkes (6) zwischen den Armteilen (5a, b) ein Stellzylinder (7a...) zur Einstellung der Winkelstellung zwischen den Armteilen (5a, b) vorhanden ist, der sich auf der Außenseite, also der vom kleineren Zwischenwinkel abgewandten Seite der Armteile (5a, b), befindet.

4. Reinigungsgerät nach einem der vorhergehenden Ansprüche,
**dadurch gekennzeichnet, dass**
- die Bürsten (8a, b, c) eine Borstenlänge (13) von mindestens 12 %, besser 25 %, besser 30 % des Abstandes (14) des Bodens der Rinne vom Zentralrohr (101) besitzen, und
- die Bürsten (8a, b) in ihrer Verlaufsrichtung sich einander überdecken.

5. Reinigungsgerät nach einem der vorhergehenden Ansprüche,
**dadurch gekennzeichnet, dass**
der Zwischenwinkel (9) zwischen den Rotationsachsen (8'a, 8'b..) einstellbar ist.

6. Reinigungsgerät nach einem der vorhergehenden Ansprüche,
**dadurch gekennzeichnet, dass**
der Kragarm (42') Bestandteil eines Parallelogramms mit vier gelenkig miteinander verbundenen Streben ist, von dem die beiden Gelenkpunkte der einen kurzen Seite des Parallelogramms an der Halterung der mittleren Bürste (8a) drehbar befestigt sind und die gegenüberliegende kurze Seite des Parallelogramms durch die über den Drehpunkt bezüglich des Kragarms (42) hinaus verlängerten Grundkörper (18) der äußeren Bürste (8b) gebildet wird, wobei der Kragarm (42') mittels eins Hydraulikzylinders (45), der sich andererseits am Tragrahmen (40) der mittleren Bürste (8a) abstützt, gesteuert verschwenkbar ist.

7. Reinigungsgerät nach einem der vorhergehenden Ansprüche,
**dadurch gekennzeichnet, dass**
- in Fortschrittsrichtung (10) den Bürsten (8a, b, c) eine Sprühleiste (16), insbesondere eine über die gesamte Breite des Reinigungskopfes (3) durchgehende Sprühleiste (16), mit einer Vielzahl von Austrittsöffnungen (22a, b..) für die Reinigungsflüssigkeit vorgelagert ist, und insbesondere
- bei Bewegung der Borsten auf der Fläche in Fortschrittsrichtung die Austrittsöffnungen (22a, b..) so ausgerichtet sind, dass die Reinigungsflüssigkeit zumindest teilweise auf die rotierenden Borsten spritzt, wenn die Sprühleiste (16) hinter den Bürsten (8a, b) angeordnet ist, oder auf die zu reinigende Fläche (100') sprüht, wenn die Sprühleiste (16) in Fortschrittsrichtung (10) vor den Bürsten (8a, b, c) angeordnet ist.

8. Reinigungsgerät nach einem der vorhergehenden Ansprüche,
**dadurch gekennzeichnet, dass**
- der Auslegerarm (2a, b) in der Mitte des Reinigungskopfes befestigt ist,
- der Zentralkörper (18) der Bürste (8) aus zwei über ein Kreuzgelenk (17) miteinander verbundenen Teilen (18a, b) besteht, deren Enden über einen U-förmigen Tragrahmen (40') miteinander verbunden sind und die Enden der Bürste (8) über einen Stellzylinder (7b) im Bügel auf den gewünschten Abstand zueinander einstellbar sind.

9. Reinigungsgerät nach einem der vorhergehenden Ansprüche,
**dadurch gekennzeichnet, dass**
der Reinigungskopf (3a...) eine in Fortschrittsrichtung (10) hinter den Bürsten (8a, b) angeordnete Abziehlippe (21) zum Abziehen der Reinigungsflüssigkeit von der zu reinigenden Fläche (100') umfasst, die insbesondere schräg zur Fortschrittsrichtung (10) steht und deren oberes Ende weiter vorne als das untere Ende steht.

10. Reinigungsgerät nach einem der vorhergehenden Ansprüche,
**dadurch gekennzeichnet, dass**
die Rotationsachsen (8'a, b...) der Bürsten (8a...) schräg zur Fortschrittsrichtung (10) stehen, insbesondere mit dem oberen Enden in Fortschrittsrichtung (10) weiter vorne als mit dem unteren Ende.

11. Reinigungsgerät nach einem der vorhergehenden Ansprüche,
**dadurch gekennzeichnet, dass**
- der Reinigungskopf (3a..) eine Reinigungs-Einrichtung für **ein entfernt von den gebogenen Profilrinnen angeordnetes** Zentralrohr (101) aufweist, **und insbesondere**
- die Sprühleiste (16) wenigstens eine Austrittsöffnung (22x) für Reinigungsflüssigkeit aufweist, die auf das Zentralrohr (101) gerichtet ist.

12. Reinigungsgerät nach einem der vorhergehenden Ansprüche,
**dadurch gekennzeichnet, dass**
- der Zentralkörper (18) der Bürste (8a) in der Seitenansicht ballig geformt ist und der Borstenbesatz in Form einer auf den Zentralkörper (18) spiralig aufgewickelten bandförmigen, flexiblen Borstentragplatte (19), an der die Borsten befestigt sind, auf den Zentralkörper (18) aufgewickelt und fixiert, insbesondere verschraubt, ist, oder
- die Bürsten (8a..) zylindrische Bürsten mit über den Längsverlauf gleichbleibender Borstenlänge sind oder in ihrem Längsverlauf sich ändernde Borstenlängen aufweisen.

13. Reinigungsgerät nach einem der vorhergehenden Ansprüche,
**dadurch gekennzeichnet, dass**
jeder Reinigungskopf (3a) mindestens einen, besser in Querrichtung (11) zwei, beabstandete berührungslose Sensoren (20) zum Erfassen einer markanten längs verlaufenden Kontur, insbesondere der Außenkanten der zu reinigenden Fläche, aufweist.

14. Reinigungsgerät nach einem der vorhergehenden Ansprüche,
**dadurch gekennzeichnet, dass**
das Reinigungsgerät (1) an der Basis, die die Auslegerarme (2a, b) trägt, wenigstens einen berührungslosen Sensor (20c) zum Erfassen des Abstandes des Reinigungsgerätes (1) vom Rand der zu reinigenden Fläche (100') umfasst.

15. Reinigungsgerät nach einem der vorhergehenden Ansprüche,
**dadurch gekennzeichnet, dass**
- jeder Reinigungskopf (3) eine Vorreinigungseinheit (23) für die Grobreinigung aufweist, die Druckluftauslässe (24) oder Sauglufteinlässe (25) oder Vibratoren, insbesondere Ultraschallvibratoren (26), aufweist und insbesondere
- die Sauglufteinlässe (25) als Saugluftquelle über Druckluftejektoren (27) verfügen.

16. Reinigungsgerät nach einem der vorhergehenden Ansprüche,
**dadurch gekennzeichnet, dass**
- wenigstens der weiter unten arbeitende Reinigungskopf (3b) eine Auffangvorrichtung (28) für das von der Unterkante der zu reinigenden Fläche ablaufende Reinigungsfluid aufweist, die insbesondere eine Auffangrinne (29) und insbesondere auch einen Unterdruckanschluss in der Auffangrinne (29) umfasst und insbesondere
- das Reinigungsgerät (1) eine Wiederaufbereitungsanlage (32) für verschmutzte Waschflüssigkeit aufweist, die insbesondere einen Schmutzfilter (33) und einen Zwischenbehälter (34) für verschmutzte Reinigungsflüssigkeit umfasst.

17. Reinigungsgerät nach einem der vorhergehenden Ansprüche,
**dadurch gekennzeichnet, dass**
das Reinigungsgerät (1) eine Steuerung (35) umfasst, welche die Teleskopierung und Schrägstellung der Auslegerarme (3a, b) und/oder die Schrägstellung der Reinigungsköpfe (3a...) sowie den Abstand (14) der Reinigungsköpfe von der zu reinigenden Fläche (100') automatisch in Abhängigkeit der Signale der Sensoren (20a, b...) steuert.

18. Reinigungsgerät nach einem der vorhergehenden Ansprüche,
**dadurch gekennzeichnet, dass**
- das Reinigungsgerät (1), insbesondere jeder Reinigungskopf (3), einen E-Feldgenerator (30) aufweist, der ein elektrisches Feld von mindestens 50 Volt pro Meter, besser 200 Volt pro Meter erzeugt, um die Oberflächenspannung der verwendeten Reinigungsflüssigkeit, insbesondere des Wassers, zu reduzieren, und insbesondere
- der E-Feldgenerator (30) wenigstens eine Teslaspule (36) sowie einen mit dem heißen Ende der Teslaspule (36) elektrisch verbundenen Strahler (37), insbesondere einen Kugelstrahler, umfasst.

19. Reinigungsgerät nach einem der vorhergehenden Ansprüche,
**dadurch gekennzeichnet, dass**
der E-Feldgenerator (30) nahe den Zuführungsleitungen (31) für Reinigungsflüssigkeit an die Reinigungsköpfe (3a, b), insbesondere zusätzlich zu einem E-Feldgenerator (30) an den Reinigungsköpfen, angeordnet ist und die Zuführungsleitung (31) für Reinigungsflüssigkeit durch das Auge der Teslaspule (36) hindurch verläuft.

20. Reinigungsgerät nach einem der vorhergehenden Ansprühe, welches ein Reinigungsfahrzeug (50) mit umfasst,
**dadurch gekennzeichnet, dass**
**bei zwei in Fortschrittsrichtung (10) hintereinander angeordeten Auslegerarmen (2a, b)**
- der vorne arbeitende, insbesondere lange, Auslegerarm (2a) vor der Front des Fahrzeuges (50) und der weiter hinter arbeitende, insbesondere kürzere, Auslegerarm (2b) hinter der Fahrerkabine (51), insbesondere am Heck des Reinigungs-Fahrzeuges (50), angeordnet ist,
- das Fahrzeug (50) eine Blockiervorrichtung für die Federung, die wenigstens auf einer Seite des Fahrzeuges (50) wirksam ist, umfasst, insbesondere in Form eines verriegelbaren Torsions-Zusatzrahmens (53) oder einer verriegelbaren vertikalen Achsestütze an der ungelenkten Achse.

## Claims

1. A cleaning device (1) for cleaning profile surfaces (100') cambered transversal to an advance direction (10), comprising:
- at least two extension arms (2a, b);
- a respective cleaning head (3a, b) at their free ends,
- wherein the cleaning head (3a...) includes three rotating brushes (8a, b, c) whose rotation axes (8a, b, c) extend parallel to a tangential direction (12) of the surface (100') to be cleaned, and wherein the rotation axes (8'a, 8'b, 8'c) are at a slant angle to one another,
**characterized in that**
- the cleaning head (3a...) is adjustable with respect to its slant angle relative to the extension arm (2a, b) and attached pivotable by 180° about the longitudinal axis (2') of the extension arm (2a, b);
- a center brush (8a) is pivotably attached at an extension arm (2a, b);
- the two other brushes (8b, c) are adjustably fixated at the support of the center brush (8a) and supported in a floating manner on one side; and
- a central element (18) of at least one of the outer brushes (8b, c) is pivotable in its end portion at an outrigger arm (42) or pivotable with an outrigger arm (42) relative to the center brush (8a).

2. The cleaning device according to claim 1,
wherein the center brush (8a) is automatically adjustable at the extension arm (2a) with respect to its angular position during operations.

3. The cleaning device according to claim 1 or 2,
**characterized in that**
- the extension arm (2a, b) is extendable and made in particular from two or three arm elements (5a, b) pivotably connected with one another, wherein the arm elements are advantageously both extendable in their longitudinal directions, and/or
- an actuation cylinder (7a...) is provided proximal to a pivot joint between the arm elements (5a, b) for adjusting the angular position between the arm elements (5a, b), wherein the actuation cylinder is arranged at an outside, thus on a side of the arm elements (5a, b) that is oriented away from a smaller intermediary angle.

4. The cleaning device according to one of the preceding claims,
**characterized in that**
- the brushes (8a, b, c) have a bristle length (13) of at least 12 %, better 25 %, better 30 % of a distance (14) of a base of the channel from the central tube (101), and
- the brushes (8a, b) overlap in their extension.

5. The cleaning device according to one of the preceding claims,
**characterized in that**
an intermediary angle (9) between the rotation axes (8'a, 8'b...) is adjustable.

6. The cleaning device according to one of the preceding claims,
**characterized in that**
the outrigger arm (42') is an element of a parallelogram with four struts that are linked together, wherein two link points of a first short side of the parallelogram are rotatably attached at the support of the center brush (8a) and an opposite short side of the parallelogram is formed by the base element (18) of the outer brush (8b) that is extended beyond the rotation point with respect to the outrigger arm (42), wherein the outrigger arm (42') is pivotable in a controlled manner through a hydraulic cylinder (45) which is supported on the other hand side at the support frame (40) of the center brush (8a).

7. The cleaning device according to one of the preceding claims,
**characterized in that**
- a spray bar (16) is arranged in feed direction (10) in front of the brushes (8a, b, c), in particular a spray bar (16) that extends over an entire width of the cleaning head (3) and includes a plurality of outlet openings (22a, b...) for the cleaning liquid and in particular
- the outlet openings (22a, b) are aligned on the surface in feed direction when the bristles are moved so that the cleaning liquid sprays at least partially onto the rotating bristles when the spray bar (16) is arranged behind the brushes (8a, b) or so that the cleaning liquid sprays onto the surface (100') to be cleaned when the spray bar (16) is arranged in feed direction (10) in front of the brushes (8a, b, c).

8. The cleaning device according to one of the preceding claims,
**characterized in that**
- the extension arm (2a, b) is attached in a center of the cleaning head;
- the central element (18) of the brush (8) includes two elements (18a, b) connected with one another through a universal link (17), wherein ends of the connected elements are connected with one another through a U-shaped support frame (40') and the ends of the brush (8) are adjustable through an actuation cylinder (7b) in the bracket so that they have a desired distance from one another.

9. The cleaning device according to one of the preceding claims,
wherein the cleaning head (3a...) has a wiper lip (21) that is arranged in advance direction (10) behind the brushes (8a, b) for wiping the cleaning fluid from the surface (100') to be cleaned, wherein the wiper lip is in particular arranged at a slant angle to the feed direction (10) and wherein an upper end of the wiper lip is arranged further ahead than a lower end.

10. The cleaning device according to one of the preceding claims,
**characterized in that**
- the rotation axes (8'a, b...) of the brushes (8a...) are arranged at a slant angle relative to the feed direction (10), in particular with the upper ends further ahead in feed direction (10) than the lower ends.

11. The cleaning device according to one of the preceding claims,
**characterized in that**
- the cleaning head (3a) includes a cleaning device for a central tube (101) that is arranged remote from the cambered profile channels, and in particular
- the spray bar (16) includes at least one outlet opening (22x) for cleaning fluid which is oriented towards the center tube (101).

12. The cleaning device according to one of the preceding claims,
**characterized in that**
- the central element (18) of the brush (8a) is formed convex in a side view and a bristle insert formed as a band shaped flexible bristle support plate (19) with bristles attached to it is wound as a spiral on the central element (18) and fixated, in particular bolted down, and, or
- the brushes (8a...) are cylindrical brushes with constant bristle lengths over a longitudinal extension of the brushes, or the bristle lengths change over the longitudinal extension of the brushes.

13. The cleaning device according to one of the preceding claims,
**characterized in that**
- each cleaning head (3a) includes at least one, better two touch free sensors (20) offset in transversal direction (11) for detecting a significant longitudinally oriented contour, in particular of the outer edges of the surface to be cleaned.

14. The cleaning device according to one of the preceding claims,
**characterized in that**
- the cleaning device (1) includes at least one touch free sensor (20c) at a base which supports the extension arms (2a, b) for detecting a distance of the cleaning device (1) from an edge of the surface (100') to be cleaned.

15. The cleaning device according to one of the preceding claims,
**characterized in that**
- each cleaning head (3) includes a pre-cleaning unit (23) for coarse cleaning which includes compressed air outlets (24) or suction inlets (25) or vibrators, in particular ultrasound vibrators (26) and in particular
- the suction air inlets (25) include compressed air ejectors (27) for suction air sources.

16. The cleaning device according to one of the preceding claims,
**characterized in that**
- at least a lower operating cleaning head (3b) includes a capture device (28) for the cleaning fluid running off from the bottom edge of the surface to be cleaned, wherein the capture device includes in particular a capture channel (29) and in particular also a vacuum connection in the capture channel (29) and in particular
- the cleaning device (1) includes a recycling arrangement (32) for contaminated washing fluid, wherein the recycling arrangement includes in particular a contaminant filter (33) and an intermediary container (34) for contaminated cleaning fluid.

17. The cleaning device according to one of the preceding claims,
**characterized in that**
- the cleaning device (1) includes a control (35) which controls telescoping and slanting of the extension arms (3a, b) and/or the slanting of the cleaning heads (3a...) and the distance (14) of the cleaning heads from the surface (100') to be cleaned automatically as a function of the signals of the sensors (20a, b...).

18. The cleaning device according to one of the preceding claims,
**characterized in that**
- the cleaning device (1), in particular each cleaning head (3), includes an electrical field generator (30) which generates an electrical field of at least 50V/m, better 200V/m in order to reduce a surface tension of the cleaning fluid used, in particular of water, and in particular
- the E-field generator (30) includes at least one Tesla coil (36) and a radiator (37) electrically connected with the hot end of the Tesla coil (36), in particular a spherical radiator.

19. The cleaning device according to one of the preceding claims,
**characterized in that**
- the electrical field generator (30) is arranged proximal to the feed conduits (31) for cleaning fluid to the cleaning heads (3a, b), in particular in addition to an E-field generator (30) at the cleaning heads and the feed conduit (31) for the cleaning fluid runs through the core of the Tesla coil (36).

20. The cleaning device according to one of the preceding claims,
further including a cleaning vehicle (50), **characterized by**
two extension arms (2a, b) arranged behind one another in feed direction (10), wherein
- the extension arm (2a) that operates in front and that is in particular long is arranged in front of the vehicle (50) and the extension arm (2b) that operates further behind and is in particular shorter is arranged behind the vehicle cab (51), in particular at a rear of the cleaning vehicle (50),
- wherein the vehicle (50) includes a blocking device for the spring support, wherein the blocking device is effective at least on one side of the vehicle (50) and is configured in particular as a lockable additional torsion frame (53) or as a lockable vertical axle support at a non-steered axle.

## Revendications

1. Appareil de nettoyage (1) pour le nettoyage de surfaces profilées (100') incurvées transversalement au sens de progression (10), comprenant
- au moins deux bras de flèche (2a, b),
- aux extrémités desquelles se trouve resp. une tête de nettoyage (3a, b),
- la tête de nettoyage (3a, ...) comprenant trois brosses rotatives (8a, b, c), dont les axes de rotation (8a, b, c) s'étendent parallèlement à la direction tangentielle (12) de la surface à nettoyer (100') et les axes de rotation (8'a, 8'b, 8'c) étant obliques les uns par rapport aux autres,
**caractérisé en ce que**
- la tête de nettoyage (3a, ...) est réglable dans sa position inclinée par rapport au bras de flèche (2a, b) et est fixée pivotante sur 180° autour de l'axe longitudinal (2') du bras de flèche (2a, b),
- la brosse médiane (8a) est fixée en articulation sur le bras de flèche (2a, b),
- les deux autres brosses (8b, c) sont fixées sur le support de la brosse médiane (8a) et sont logées sur un côté de manière flottante,
- le corps central (18) d'au moins l'une des brosses externes (8b, c) est pivotant dans sa zone d'extrémité sur un bras de flèche (42) ou est pivotant avec un bras de flèche (42) par rapport à la brosse médiane (8a).

2. Appareil de nettoyage selon la revendication 1,
**caractérisé en ce que**
la brosse médiane (8a) est réglable automatiquement en cours de fonctionnement sur le bras de flèche (2a) dans sa position angulaire.

3. Appareil de nettoyage selon la revendication 1 ou 2,
**caractérisé en ce que**
- le bras de flèche (2a, b) est télescopique et se compose en particulier de deux ou trois parties de bras (5a, b) reliées de manière articulée entre elles, qui sont de préférence toutes les deux télescopiques dans leur extension longitudinale, et/ou
- à proximité de l'articulation (6) entre les parties de bras (5a, b), il est prévu un vérin de réglage (7a, ...) qui se trouve sur la face externe donc sur la face des parties de bras (5a, b) opposées à l'angle intermédiaire le plus petit.

4. Appareil de nettoyage selon l'une des revendications précédentes,
**caractérisé en ce que**
- les brosses (8a, b, c) possède une longueur de poils (13) d'au moins 12 %, au mieux 25 %, au mieux 30 % de la distance (14) entre le fond de la rainure et le tube central (101), et
- les brosses (8a, c) se chevauchent dans leur direction de défilement.

5. Appareil de nettoyage selon l'une des revendications précédentes,
**caractérisé en ce que**
l'angle intermédiaire (9) est réglable entre les axes de rotation (8'a, 8'b...).

6. Appareil de nettoyage selon l'une des revendications précédentes,
**caractérisé en ce que**
le bras de flèche (42') fait partie d'un parallélogramme avec quatre jambes de force reliées entre elles dont les deux points d'articulation d'une face courte du parallélogramme est fixée en rotation sur la fixation de la brosse moyenne (8a) et la face opposée courte du parallélogramme est formée par les corps de base (18) de la brosse moyenne (8a) s'étendant au-delà du point de rotation par rapport au bras de flèche (42), le bras de flèche (42') étant commandé de manière pivotante au moyen d'un vérin hydraulique (45) qui s'appuie de l'autre côté sur le cadre support (40) de la brosse médiane (8a).

7. Appareil de nettoyage selon l'une des revendications précédentes,
**caractérisé en ce que**
- dans la direction de progression (10), une barre de pulvérisation (16), en particulier une barre de pulvérisation (16) continue sur l'ensemble de la largeur est placée en amont des brosses (8a, b, c) sur l'ensemble de la largeur de la tête de nettoyage (3) et qui comprend un grand nombre d'ouvertures de sortie (22a, b.) pour le liquide de nettoyage et en particulier
- en cas de déplacement des poils sur la surface dans la direction de progression, les ouvertures de sortie (22a, b) sont orientées de sorte que le liquide de nettoyage est pulvérisé au moins partiellement sur les brosses rotatives, si la rampe de pulvérisation (16) est disposée derrière les brosses (8a, b) ou bien la surface à nettoyer (100') quand la buse de pulvérisation (16) pulvérise sur la surface à nettoyer (100'), quand la barre de pulvérisation (16) est disposée dans la direction de progression (10) en amont des brosses (8a, b, c).

8. Appareil de nettoyage selon l'une des revendications précédentes,
**caractérisé en ce que**
- le bras de flèche (2a, b) est fixé au milieu de la tête de nettoyage,
- le corps central (18) de la brosse (8) se compose de deux parties (18a, b) reliées entre elles par une articulation cruciforme (17) dont les extrémités sont reliées entre elles par un cadre support en forme de U (40') dont les extrémités sont reliées par un cadre support (40') en forme de U et les extrémités de la brosse (8) sont réglables par un vérin de réglage (7b) en étrier à distance souhaitées entre elles.

9. Appareil de nettoyage selon l'une des revendications précédentes,
**caractérisé en ce que**
la tête de nettoyage (3a...) comprend une lèvre de retrait (21) disposée dans la direction de progression (10) derrière les brosses (8a, b) pour le retrait du liquide de nettoyage de la surface (100') à nettoyer, tête qui est inclinée par rapport à la direction de progression (10) et dont l'extrémité supérieure est avancée plus en avant que l'extrémité inférieure.

10. Appareil de nettoyage selon l'une des revendications précédentes,
**caractérisé en ce que**
les axes de rotation (8'a, b...) des brosses (8a...) sont inclinées par rapport à la direction de progression (10), en particulier avec l'extrémité supérieure dans la direction de progression (10) plus vers l'avant que l'extrémité inférieure.

11. Appareil de nettoyage selon l'une des revendications précédentes,
**caractérisé en ce que**
- la tête de nettoyage (3a...) présente un dispositif de nettoyage pour un tube central (101) disposé éloigné des rainures profilées courbées, et en particulier
- la barre de pulvérisation (16) présente au moins une ouverture de sortie (22x) pour le liquide de nettoyage qui est orienté en direction du tube central (101).

12. Appareil de nettoyage selon l'une des revendications précédentes,
**caractérisé en ce que**
- le corps central (18) de la brosse (8a) est de forme bombée en vue latérale et la garniture de brosse est enroulée et fixée en particulier vissée sur le corps central (18) sous forme d'une plaque support de poils flexible, en bande enroulée en spirale, plaque sur laquelle sont fixés les poils, ou
- les brosses (8a...) sont des brosses cylindriques avec une longueur de poils constante dans le sens longitudinal ou présentent dans le sens longitudinal des longueurs de poils variables.

13. Appareil de nettoyage selon l'une des revendications précédentes,
**caractérisé en ce que**
chaque tête de nettoyage (3a) présente au moins un de préférence deux capteurs (20) sans contact à distance dans la direction transversale (11) pour la détection d'un contour prononcé s'étendant dans le sens longitudinal, en particulier des bords externes de la surface à nettoyer.

14. Appareil de nettoyage selon l'une des revendications précédentes,
**caractérisé en ce que**
l'appareil de nettoyage (1) comprend sur la base, qui supporte les bras de flèche (2a, b), au moins un capteur sans contact (20c) pour la détection de la distance entre l'appareil de nettoyage (1) et le bord de la surface à nettoyer (100').

15. Appareil de nettoyage selon l'une des revendications précédentes,
**caractérisé en ce que**
- chaque tête de nettoyage (3) présente une unité de pré-nettoyage (23) pour le nettoyage grossier, les sorties d'air comprimé (24) ou les entrées d'air aspiré (25) ou des vibrateurs, en particulier des vibrateurs à ultra-sons (26) et en particulier
- les entrées d'air aspiré (25) disposent d'éjecteurs d'air (27) comprimé comme source d'air aspiré.

16. Appareil de nettoyage selon l'une des revendications précédentes,
**caractérisé en ce qu'**
- au moins la tête d'aspiration (3b) travaillant plus loin vers le bas présente un dispositif de récupération (28) pour le liquide de nettoyage s'écoulant de la surface à nettoyer, qui comprend en particulier une rigole de récupération (29) et en particulier également un raccord de dépression dans la rigole de récupération (29) et en particulier
- l'appareil de nettoyage (1) présente une installation de retraitement (32) pour le liquide de lavage sale, qui comprend en particulier un filtre à poussière (33) et un récipient intermédiaire (34) pour le liquide de nettoyage sale.

17. Appareil de nettoyage selon l'une des revendications précédentes,
**caractérisé en ce que**
l'appareil de nettoyage (1) comprend une commande (35) qui commande le télescopage et la position inclinée des bras de flèche (3a, b) et/ou la position inclinée des têtes de nettoyage (3a...) ainsi que la distance (14) des têtes de nettoyage avec la surface (100') à nettoyer de manière automatique en fonction des signaux des capteurs (20a,b...).

18. Appareil de nettoyage selon l'une des revendications précédentes,
**caractérisé en ce que**
- l'appareil de nettoyage (1), en particulier chaque tête de nettoyage (3), présente un générateur de champ E (30) qui génère un champ électrique d'au moins 50 volts par mètre, de préférence 200 volts par mètre, pour réduire la tension de surface du liquide utilisé de nettoyage, en particulier de l'eau, et en particulier
- le générateur de champ E (30) comprend au moins une bobine Teslas (36) ainsi qu'un émetteur de rayonnement (37) relié électriquement à l'extrémité chaude de la bobine Tesla (36), en particulier une antenne isotrope.

19. Appareil de nettoyage selon l'une des revendications précédentes,
**caractérisé en ce que**
le générateur de champ E (30) est disposé près des conduites d'alimentation (31) pour le liquide de nettoyage aux têtes d'alimentation (3a, b), en particulier en supplément d'un générateur de champ E (30), et la conduite d'amenée (31) s'étend à travers l'oeil de la bobine Tesla (36) pour le liquide de nettoyage.

20. Appareil de nettoyage selon l'une des revendications précédentes,
**caractérisé en ce que**
dans le cas de deux bras de flèche (2a, b) disposés les uns derrière les autres dans la direction de progression (10),
- le bras de flèche (2a) en particulier long travaillant vers l'avant est disposé devant l'avant du véhicule (50) et le bras de flèche (2b) en particulier plus court travaillant plus loin vers l'arrière est disposé derrière la cabine du conducteur (51) en particulier sur le haillon de véhicule de nettoyage (50),
- le véhicule (50) comprend un dispositif de blocage pour l'amortissement, lequel agit au moins sur un côté du véhicule (50), en particulier sous forme d'un cadre (53) verrouillable en torsion supplémentaire ou d'un support d'axe vertical verrouillable sur l'axe non-articulé.
